# EUROPÄISCHE PATENTSCHRIFT

(11) **EP 3 492 224 B1**
(45) Veröffentlichungstag und Bekanntmachung des Hinweises auf die Patenterteilung: **18.08.2021**
(21) Anmeldenummer: 18198035.0
(22) Anmeldetag: 01.10.2018
(51) Int. Cl.: B25G 1/10, A63B 49/08, B60T 7/08, G05G 1/06, B25G 1/01

(54) **HANDGRIFF UND VERFAHREN ZU DESSEN HERSTELLUNG**
HANDLE AND METHOD FOR ITS PRODUCTION
POIGNÉE ET SON PROCÉDÉ DE FABRICATION

(30) Priorität: 30.11.2017 DE 102017128485
(43) Veröffentlichungstag der Anmeldung: 05.06.2019
(73) Patentinhaber: Richter, Frank, 72800 Eningen unter Achalm (DE)
(72) Erfinder: Richter, Frank, 72800 Eningen unter Achalm (DE)
(74) Vertreter: Hoeger, Stellrecht & Partner Patentanwälte mbB

(56) Entgegenhaltungen:
- DE-A1- 10 310 095
- DE-A1-102006 061 247
- DE-A1-102007 009 169
- DE-U1- 8 905 298
- US-A- 2 603 260

## Beschreibung

Die Erfindung betrifft einen Handgriff gemäß dem Oberbegriff des Patentanspruchs 1, sowie ein Verfahren zu dessen Herstellung. Handgriffe kommen insbesondere als Griffe für Fahrzeuge, Sportgeräte, Waffen und Freizeiteinrichtungen und -geräte zum Einsatz.

Aus der DE 10 2007 009 169 A1 ist ein Handgriff bekannt, welcher einen Griffkern und eine auf dem Griffkern angeordnete Griffhülle umfasst. Die Griffhülle umfasst mindestens ein schwingungsdämpfendes Mittel sowie ein Befestigungselement, wobei das schwingungsdämpfende Mittel vorspannbar ist.

Aus der US 2015/0292584 A1 ist eine radiale Feder für mechanische oder elektromechanische Anwendungen zur Kontrolle von radialen Kräften zwischen daran anschließenden konzentrischen Komponenten bekannt. Die radiale Feder umfasst ein Basiselement, Stützelemente und Federelemente, welche jeweils an dem Basiselement angeordnet sind. Die Federelemente sind radial verformbar.

Aus der DE 103 10 095 A1 ist ein Griffelement für ein Handwerkzeug bekannt, welches auf einer Griffseele eines Werkzeugstieles angeordnet ist, mit einem Griffbereich und einem Griff-Endbereich, an dessen Stirnfläche ein Schutzelement befestigt ist, wobei der Griffbereich aus zahlreichen, auf der Griffseele angeordneten, vorzugsweise schwingungsdämpfenden Scheiben gebildet wird. Ein freier Endbereich der Griffseele ist mit mindestens einem Innengewinde versehen. Das Schutzelement ist als ein der Kontur des Griff-Endbereiches entsprechendes massives Endstück ausgebildet, welches dem Innengewinde gegenüberliegend eine Durchgangsbohrung aufweist, in der zur Befestigung des Endstücks an der Griffseele eine Gewindeschraube befestigbar ist, deren Kopf in eine die Durchgangsbohrung umgebende Einsenkung im Wesentlichen vollständig eintaucht.

Die US 2,603,260 A, die einen Handgriff gemäß dem Oberbegriff des Patentanspruchs1 zeigt, offenbart ein Schlagwerkzeug, welches einen verlängerten Griff mit einem Schlagende und einem hinteren Ende umfasst. An dem Schlagende ist ein Schlagkopf angeordnet. Das Schlagwerkzeug umfasst einen nachgiebigen Abstandhalter, welcher das Schlagende umgibt, aber von dem Schlagkopf beabstandet angeordnet ist.

Aus der DE 10 2006 061 247 A1 Handgriff, umfassend eine Griffhülle und einen Griffkern, bekannt. Der Griffkern weist an einem Ende ein Befestigungselement auf und erstreckt sich bis an das dem Befestigungselement gegenüberliegende Ende der Griffhülle. Der Handgriff umfasst ferner einen zwischen Griffhülle und Griffkern angeordneten Zwischenraum, in welchem zumindest ein Dämpfungselement vorgesehen ist. Der Griffkern bildet in der Griffhülle einen berührungslosen Hinterschnitt.

Die DE 8 905 298 U1 offenbart eine Vorrichtung zur Steuerung von Hand für Maschinene, deren Betrieb von einem elektrischen Zustimmungssignal abhänggig ist. Die Vorrichtung umfasst einen mit der Hand umfassbaren Hohlkörper, ein zentral in dem Innenraum des Hohlkörpers angebrachtes strahlendes Element, einen Generator und eine Schwellwertdetektoreinrichtung.

Aufgabe der vorliegenden Erfindung ist es, einen Handgriff bereitzustellen, welcher an die Handform des Benutzers anpassbar ist und darüber hinaus einfach und kostengünstig herstellbar ist.

Diese Aufgabe wird erfindungsgemäß durch einen Handgriff gemäß Anspruch 1 gelöst.

Dadurch, dass der Handgriff neben einem im Wesentlichen zylindrischen oder teilzylindrischen Grundkörper eine Hüllstruktur umfasst, welche sich entlang der Längsrichtung des Grundkörpers und entlang dem äußeren Umfang des Grundkörpers zumindest teilweise beabstandet von dem Grundkörper erstreckt und zumindest partiell elastisch verformbar ist, kann eine Anpassung des Handgriffs an die Hand des Benutzers, welche sich um den Handgriff schließt, realisiert werden. Dies erhöht die Benutzerfreundlichkeit in erheblichem Maße.

Die zumindest teilweise Beabstandung der Hüllstruktur von dem Grundkörper des Handgriffs, d.h. von dessen äußerem Umfang, und die Ausbildung von mehreren Segmenten in der Hüllstruktur, welche im Wesentlichen senkrecht zur Längsrichtung ausgebildet sind, ergeben eine zusätzlich verbesserte Anpassbarkeit des Handgriffs an die Hand des Benutzers.

Darüber hinaus kann im Vergleich zu Handgriffen aus einem Vollmaterial aufgrund der Beabstandung zwischen dem Grundkörper und der Hüllstruktur Material eingespart werden, wodurch eine kostengünstigere Herstellung möglich ist.

Günstig ist es, wenn der Handgriff mehrere in Längsrichtung aufeinander folgende Griffelemente umfasst, wobei dann der Grundkörper ebenfalls in Segmente unterteilt ist.

So sind die einzelnen Griffelemente insbesondere separat herstellbar und können je nach Bedarf und Anforderungen angepasst werden. Insbesondere können die physikalischen Eigenschaften, wie beispielsweise der E-Modul und/ oder die Härte, und/oder optische Eigenschaften, wie beispielsweise Farbe, der einzelnen Griffelemente unabhängig voneinander je nach Anforderungen und/ oder Wunsch des Benutzers angepasst werden. Auch kann ein Griffelement ein Segment des Grundkörpers und ein oder mehrere Segmente der Hüllstruktur umfassen.

Alternativ kann vorgesehen sein, dass der Handgriff einstückig hergestellt ist. Dies kann bei der Produktion von Serienmodellen von Vorteil sein, da erhöhte Stückzahlen ohne Anpassung der Produktionsparameter hergestellt werden können.

Die Hüllstruktur umfasst vorzugsweise zehn Segmente oder mehr, insbesondere zwanzig Segmente oder mehr, beispielsweise dreißig Segmente oder mehr. Diese Anzahl an Segmenten kann ausreichend sein, um eine verbesserte Variierbarkeit eines äußeren Umfangs der einzelnen Segmente zu ermöglichen.

Vorzugsweise umfasst die Hüllstruktur sechzig Segmente oder weniger, insbesondere fünfzig Segmente oder weniger, beispielsweise vierzig Segmente oder weniger. Durch diese Anzahl kann eine sehr genaue Anpassung des Handgriffs an die Handform des Benutzers beim Umschließen des Handgriffs vorgenommen werden und gleichzeitig ist der Handgriff insbesondere mit vertretbarem Aufwand herstellbar.

Für die Herstellung und Handhabbarkeit des Handgriffs ist es vorteilhaft, wenn die Hüllstruktur und/oder der Grundkörper des Handgriffs aus einem Kunststoffmaterial hergestellt ist/sind. So kann der Handgriff mit einem verringerten Gewicht im Vergleich zu Handgriffen aus metallischen Materialien hergestellt werden.

Es kann vorgesehen sein, dass die mehreren Segmente der Hüllstruktur im Wesentlichen scheibenförmig sind. Dies erleichtert eine Aneinanderreihung, insbesondere eine passgenaue Aneinanderreihung, der mehreren Segmente der Hüllstruktur in Längsrichtung des Grundkörpers.

"Scheibenförmig" bedeutet von der Zylinderform abgeleitet, wobei ein Radius des Umfangs des Segments insbesondere um ein Vielfaches größer ist als seine Dicke in Längsrichtung des Grundkörpers gesehen. "Scheibenförmig" umfasst vorzugsweise auch plattenförmige Segmente und/oder Ringsegmente. Insbesondere umfasst "scheibenförmig" auch Segmente, welche senkrecht zur Längsrichtung bereichsweise oder vollständig einen wellenförmigen oder zackenförmigen Querschnitt aufweisen, sofern ihre Mittelebene im Wesentlichen senkrecht zur Längsrichtung des Grundkörpers angeordnet ist.

Insbesondere liegen im Falle von im Wesentlichen scheibenförmigen Segmenten der Hüllstruktur im Wesentlichen ebene Flächen von in Längsrichtung des Grundkörpers aneinander angrenzenden Segmenten direkt aneinander an.

Alternativ können die Segmente der Hüllstruktur voneinander beabstandet angeordnet sein, worauf nachfolgend noch eingegangen werden wird.

Günstig ist es, wenn eine Außenfläche mindestens eines Segments, insbesondere von mehreren oder auch von sämtlichen Segmenten der Hüllstruktur, in einem Querschnitt senkrecht zur Längsrichtung im Wesentlichen kreisförmig oder im Wesentlichen teilkreisförmig ist. So kann der Handgriff komfortabel und benutzerfreundlich umgriffen werden.

Zumindest eines der mehreren, insbesondere sämtliche, Segmente der Hüllstruktur weist eine oder mehrere Zungen auf, welche vorzugsweise vollständig oder teilweise von dem äußeren Umfang des Grundkörpers beabstandet angeordnet sind. Vorzugsweise sind die Zungen elastisch am Grundkörper gehalten und/oder als solche elastisch verformbar ausgebildet.

Zur symmetrischen Anordnung der Zungen bezüglich einer Symmetrieachse parallel zur Längsrichtung des Grundkörpers ist es günstig, wenn das mindestens eine Segment, insbesondere mehrere oder auch sämtliche Segmente, eine gerade Anzahl von Zungen aufweist.

Vorzugsweise ist ein freies Ende oder sind freie Enden der einen oder der mehreren Zungen jeweils abgerundet. Dies macht sich haptisch vorteilhaft bemerkbar.

Insbesondere weist zumindest eines der mehreren, insbesondere mehrere oder auch sämtliche Segmente der Hüllstruktur zwei bis vier Zungen auf, welche vollständig oder teilweise von dem äußeren Umfang des Grundkörpers beabstandet angeordnet sind.

Die eine oder die mehreren Zungen sind insbesondere in Form eines Hohlzylindersegments ausgebildet.

Es kann vorgesehen sein, dass zumindest eine der Zungen in ihrem Verlauf senkrecht zur Längsrichtung wellenförmig oder zackenförmig ausgebildet ist. Dies kann zu einer Beabstandung benachbarter Segmente in Längsrichtung genutzt weden, womit eine optimierte Belüftung des Handgriffs realisiert werden kann.

Der Abstand zwischen Segmenten in Längsrichtung des Grundkörpers ist dabei durch die Anordnung der Wellen oder Zacken eines Segments in Umfangsrichtung relativ zu der Anordnung der Wellen oder Zacken eines im zusammengebauten Zustand in Längsrichtung benachbarten Segments einstellbar. So ist beispielsweise der Abstand in Längsrichtung maximiert, wenn im zusammengebauten Zustand des Handgriffs bei benachbarten Segmenten in Längsrichtung Wellenberg und Wellental bzw. Zackenberg und Zackental aneinander angrenzen. Die Anordnung der Wellen oder Zacken in Umfangsrichtung ist bei der Herstellung der Segmente bzw. bei deren Konstruktion wählbar. Je nachdem, wie weit die Wellen bzw. Zacken benachbarter Segmente ineinander greifen, findet eine mehr oder weniger ausgeprägte Stabilisierung der Hüllstruktur statt. Damit lässt sich die Haptik des Handgriffs weiter optimieren.

Darüber hinaus kann durch Zungen mit wellenförmigem oder zackenförmigem Querschnitt die Torsionssteifigkeit der Segmente selbst erhöht sein.

Bei den erwähnten Ausführungsformen sind die Wellen bzw. Zacken vorzugsweise parallel zueinander orientiert oder erstrecken sich strahlenförmig von einer Mittelachse des Grundkörpers weg.

Bereiche, welche parallel zur Längsrichtung gesehen einen wellenförmigen oder zackenförmigen Querschnitt aufweisen, sind vorzugsweise aus einzelnen im Querschnitt kreisbogen- bzw. zackenförmigen Elementen zusammengesetzt, die stoffschlüssig miteinander verbunden sind.

Alternativ sind die Bereiche, welche einen wellenförmigen oder zackenförmigen Querschnitt aufweisen, einstückig hergestellt.

Die eine oder die mehreren, insbesondere zwei bis vier, Zungen sind mittels eines oder mehrerer Verankerungselemente an dem Grundkörpers des Handgriffs festgelegt.

Insbesondere erstrecken sich zwei Zungen der Hüllstruktur beidseitig von jeweils einem Verankerungselement in entgegengesetzten Umfangsrichtungen des Handgriffs von dem Verankerungselement weg.

Bei Ausführungsformen mit einem Verankerungselement weist das eine Verankerungselement in Längsrichtung des Grundkörpers vorzugsweise mindestens eine Durchtrittsöffnung auf.

Bei Ausführungsformen mit mehreren Verankerungselementen weist insbesondere mindestens eines der mehreren Verankerungselemente in Längsrichtung des Grundkörpers mindestens eine Durchtrittsöffnung auf.

Mittels der mindestens einen Durchtrittsöffnung kann zum einen eine verbesserte Belüftung des Handgriffs erzielt werden. Zum anderen kann bei Griffelementen, die aus elastischen Materialien gefertigt sind, mittels der mindestens einen Durchtrittsöffnung eine federelastische Nachgiebigkeit des Griffelements senkrecht zur Längsrichtung des Handgriffs und damit eine verbesserte Anpassbarkeit des Handgriffs an die Hand des Benutzers auch im Bereich des oder der Verankerungselemente realisiert werden.

Die eine oder mehrere in Längsrichtung verlaufende Durchtrittsöffnungen der Verankerungselemente können ferner zum einen der Aufnahme von Funktionselementen dienen und/oder die Haptik des Handgriffs weiter optimieren.

Es kann vorgesehen sein, dass die eine oder die mehreren Zungen in einem Querschnitt senkrecht zur Längsrichtung des Grundkörpers spiralförmig und/ oder helixförmig bezüglich des äußeren Umfangs des Grundkörpers ausgebildet sind.

Alternativ verlaufen die eine oder die mehreren Zungen konzentrisch zur Mittelachse des Grundkörpers.

Es kann vorgesehen sein, dass das Verankerungselement einteilig ausgebildet ist und insbesondere einstückig mit dem Grundkörper und/oder einstückig mit der Hüllstruktur, insbesondere der einen oder den mehreren Zungen, hergestellt ist.

Alternativ kann vorgesehen sein, dass das Verankerungselement zweiteilig ausgebildet ist und ein erstes und ein zweites Teil umfasst. Das erste Teil ist vorzugsweise stoffschlüssig, insbesondere einstückig, mit dem Grundkörper des Handgriffs oder dessen Segment ausgebildet. Das zweite Teil ist vorzugsweise stoffschlüssig, insbesondere einstückig, mit dem jeweiligen Segment der Hüllstruktur ausgebildet.

Das erste und das zweite Teil des Verankerungselements sind vorzugsweise stoffschlüssig und/oder kraftschlüssig und/oder formschlüssig miteinander verbunden.

Beispielsweise ist das erste Teil des Verankerungselements in das zweite Teil des Verankerungselements eingeclipst oder umgekehrt.

Wie schon erwähnt kann vorgesehen sein, dass die eine oder die mehreren Zungen federelastisch an dem Grundkörper des Handgriffs festgelegt sind, wobei die eine oder die mehreren Zungen, insbesondere unabhängig voneinander, elastisch verformbar zur Aufnahme von Kräften, welche quer oder senkrecht zur Längsrichtung des Grundkörpers wirken, ausgebildet sind. So kann eine erleichterte und situationsbedingte Anpassung der Form des Handgriffs realisiert werden und darüber hinaus eine komfortable und benutzerfreundliche Verwendung des Handgriffs gewährleistet werden.

Beispielsweise neigen sich Zungen, welche in einem Bereich angeordnet sind, in welchem Kräfte, insbesondere Druckkräfte, in Richtung des Grundkörpers auf sie einwirken, zum Grundkörper hin, während die übrigen Zungen nicht oder weniger verformt werden und gegebenenfalls in einer Normalstellung verbleiben. Wenn keine Druckkräfte mehr wirken, kehren die geneigten und/ oder elastisch verformten Zungen in die Normalstellung zurück.

Die "Normalstellung" bezeichnet vorzugsweise eine Position der Zungen ohne Beaufschlagung mit quer oder senkrecht zur Längsrichtung wirkenden Kräften.

Vorteilhaft kann es sein, wenn die mehreren Segmente der Hüllstruktur zwei oder mehrere Zungen umfassen, welche sich im Wesentlichen entlang der Umfangsrichtung des Handgriffs erstrecken, wobei sich zumindest zwei der zwei oder der mehreren Zungen in einem Überlappungsbereich entlang der Umfangsrichtung überlappen und/oder einander übergreifen. So kann eine Kraftaufnahme durch die zwei oder die mehreren Zungen und gleichzeitig eine Stabilisierung des Handgriffs ermöglicht werden.

Vorzugsweise erstreckt sich der Überlappungsbereich über einen Bereich von ca. 10° bis ca. 180°, insbesondere ca. 20° bis ca. 90°, eines Kreisbogens, welcher längs der Umfangsrichtung des Handgriffs verläuft.

Die eine oder die mehreren Zungen erstrecken sich vorzugsweise über ca. 40° bis ca. 160°, insbesondere ca. 90° bis ca. 150°, eines Kreisbogens, welcher längs der Umfangsrichtung des Grundkörpers verläuft.

Der Handgriff kann auch insgesamt in mehrere Griffelemente unterteilt sein, welche in Längsrichtung des Grundkörpers hintereinander angeordnet sind, wobei die mehreren Griffelemente jeweils ein Segment des Grundkörpers und ein Segment der Hüllstruktur umfassen, wobei das Segment des Grundkörpers und das Segment der Hüllstruktur im Wesentlichen in einer Ebene senkrecht zur Längsrichtung des Grundkörpers liegen. Dies kann den Zusammenbau des Handgriffs und dessen Handhabbarkeit erleichtern.

Einzelne oder mehrere der im Zusammenhang mit den mehreren Segmenten der Hüllstruktur beschriebenen Merkmale und/oder Vorteile gelten vorzugsweise für die Griffelemente insgesamt, d.h. einschließlich der Segmente des Grundkörpers, gleichermaßen.

Insbesondere können auch die Segmente des Grundkörpers oder zumindest Teile davon im Verlauf senkrecht zur Längsrichtung wellenförmig oder zackenförmig ausgebildet sein.

Es kann vorgesehen sein, dass der Handgriff ein oder mehrere Abstandhalterelemente umfasst, welche in Längsrichtung des Grundkörpers jeweils zwischen zwei Griffelementen angeordnet sind. So kann zum einen Material eingespart werden und zum anderen eine Belüftung des Handgriffs zwischen den Griffelementen ermöglicht werden. Darüber hinaus kann so eine Verformung einzelner Segmente der Hüllstruktur unabhängig voneinander aufgrund verringerter Reibung zwischen benachbarten Segmenten der Hüllstruktur erleichtert werden.

Eine Belüftung des Handgriffs ist vorzugsweise derart realisiert, dass die Segmente der Hüllstruktur, gegebenenfalls die Griffelemente insgesamt in einem vorgegebenen Abstand voneinander angeordnet sind.

Ergänzend oder alternativ kann auch durch eine Anpassung der Geometrie der Griffelemente ein Abstand in Längsrichtung ermöglicht werden. Beispielsweise weist eines oder mehrere der mehreren Griffelemente einen oder mehrere Vorsprünge in Längsrichtung auf, wodurch vorzugsweise ein in Längsrichtung benachbartes Griffelement von diesem Griffelement beabstandet ist. Der eine oder die mehreren Vorsprünge sind beispielsweise Strukturelemente in Form von Rippenelementen.

Es kann vorgesehen sein, dass eines oder mehrere Griffelemente einen im Wesentlichen wellenförmigen Querschnitt parallel zur Längsrichtung aufweisen.

Die Griffelemente des Handgriffs sind vorzugsweise einstückig gefertigt.

Alternativ sind die Griffelemente mehrteilig ausgebildet. Bei Ausführungsformen mit mehrteiligen Griffelementen können das Segment des Grundkörpers und das Segment der Hüllstruktur als separate Teile ausgebildet sein. Es kann auch vorgesehen sein, dass das Segment des Grundkörpers, das Verankerungselement und/oder die eine oder die mehreren Zungen jeweils separat hergestellte Teile sind.

Die unterschiedlichen Teile eines Griffelements sind insbesondere stoffschlüssig und/oder formschlüssig und/oder kraftschlüssig, beispielsweise durch Ineinanderstecken und/oder Ineinanderclipsen, miteinander verbunden. So kann eine drehfeste Verbindung realisiert werden.

Ergänzend oder alternativ sind die Teile der Griffelemente unter Verwendung eines Haft- und/oder Schmelzklebers miteinander verbunden.

Da die Griffelemente als separate Bauteile hergestellt sind, können die Griffelemente insbesondere mit unterschiedlichen physikalischen und/oder optischen Eigenschaften zu einem Handgriff kombiniert werden.

Auch können Griffelemente aus voneinander verschiedenen Kunststoffmaterialien in einem Handgriff verwendet werden. So kann der Handgriff in Längsrichtung unterschiedliche Festigkeiten aufweisen und/oder die Optik und/oder Haptik kann in Längsrichtung variieren.

Es kann vorgesehen sein, dass die Griffelemente stoffschlüssig und/oder kraftschlüssig und/oder formschlüssig miteinander verbunden sind. Insbesondere lassen sich die Griffelemente miteinander verkleben. Beispielsweise kann vorgesehen sein, dass durch ein zumindest partielles Anschmelzen und/oder Verschmelzen von in Längsrichtung des Grundkörpers aneinander angrenzenden Griffelementen ein Stoffschluss realisiert wird.

Alternativ oder ergänzend kann vorgesehen sein, dass jeweils ein Segment des Grundkörpers und ein Segment der Hüllstruktur kraftschlüssig und/oder stoffschlüssig und/oder formschlüssig als Teile der Griffelemente miteinander verbunden sind.

Vorzugsweise sind der Grundkörper oder dessen Segmente und/oder die Hüllstruktur oder deren Segmente unter Verwendung eines additiven Verfahrens, insbesondere unter Verwendung eines 3D-Druckverfahrens, hergestellt. Dies kann eine auf den Kunden angepasste Herstellung des Handgriffs ermöglichen.

Alternativ oder ergänzend kann vorgesehen sein, dass der Grundkörper oder dessen Segmente und/oder die Hüllstruktur oder deren Segmente zumindest teilweise mittels Zerspanen und/oder Spritzgießen und/oder Ausstanzen hergestellt sind.

Beispielsweise ist der Grundkörper durch Spritzgießen hergestellt und die Hüllstruktur ist in einem 3D-Druckverfahren hergestellt.

Vorzugsweise hat der Grundkörper in einem Querschnitt senkrecht zur Längsrichtung eine Polygon-Form, wobei das Polygon insbesondere fünf Ecken oder mehr aufweist.

Insbesondere weist der Grundkörper in dem Querschnitt senkrecht zur Längsrichtung im Wesentlichen mittig eine Ausnehmung in Polygon-Form auf, wobei das Polygon insbesondere fünf Ecken oder mehr aufweist.

Es kann vorgesehen sein, dass der Grundkörper zumindest teilweise und/oder mindestens eines der mehreren Segmente der Hüllstruktur jeweils aus einem Kunststoffmaterial hergestellt ist/sind, wobei das Kunststoffmaterial eines oder mehrere der folgenden Polymere umfasst: thermoplastische Kunststoffe, vorzugsweise Polyester, insbesondere Polylactide, Polycaprolactone und/oder Polyethylenterephthalat (PET), Styrolpolymere, Polyamide, Polyoxymethylene (POM) und/oder Polyketone; thermoplastische Elastomere; reaktive Harze, vorzugsweise Polyurethane; Epoxy-Verbindungen und/oder Silikone und weitere thermoplastisch verarbeitbare Polymere.

Thermoplastische Kunststoffe bieten in der Regel den Vorteil einer einfachen Verarbeitbarkeit der daraus hergestellten Elemente.

Polylactide sind insbesondere gut in einem 3D-Druckverfahren, beispielsweise einem sogenannten FFM (Fused Filament Modeling) Verfahren, verarbeitbar.

Es können auch reaktive Polymere, welche nicht-thermoplastische Formmassen mit vergleichbaren mechanischen Eigenschaften ergeben, zur teilweisen oder vollständigen Herstellung des Grundkörpers oder mindestens eines der mehreren Segmente der Hüllstruktur verwendet werden.

Der Grundkörper und mindestens eines der mehreren Segmente der Hüllstruktur können aus unterschiedlichen Kunststoffmaterialien hergestellt sein. Damit können die Eigenschaften des Grundkörpers und des mindestens einen der mehreren Segmente für die ihre unterschiedlichen Funktionen optimiert werden.

Alternativ kann vorgesehen sein, dass der Grundkörper und die mehreren Segmente aus identischen Kunststoffmaterialien hergestellt sind. Vorzugsweise umfasst das Kunststoffmaterial einen oder mehrere der folgenden Füllstoffe: Verstärkungsfasern, insbesondere Kohlenstofffasern, Glasfasern, Wollastonit und/oder Naturfasern, Farbstoffe, Pigmente, Mineralstoffe, Glaskugeln, Glashohlkugeln, auf natürlichen Rohstoffen basierte Füllstoffe, insbesondere Kork und/oder Holzmehl; Stabilisatoren, insbesondere UV- und/ oder Hitze-Stabilisatoren, und Schlagzähmodifier.

Durch eine Verwendung von einem oder mehreren Füllstoffen kann der Handgriff oder Teile davon an die individuellen Anforderungen und/oder an die individuellen Wünsche des Benutzers angepasst werden. Beispielsweise kann durch Verstärkungsfasern die Stabilität der jeweiligen Elemente des Handgriffs verbessert werden und/oder kann beispielsweise die Verwendung von Farbstoffen ein individueller Farbwunsch eines Benutzers realisiert werden. Durch die Verwendung von unterschiedlichen Farbstoffen und/oder Farbstoffen in unterschiedlich hohem Anteil in unterschiedlichen Elementen kann beispielsweise ein Muster innerhalb des Handgriffs und/oder ein Farbverlauf realisiert werden.

Durch den Zusatz von Mineralstoffen lässt sich vorzugsweise eine durch den E-Modul bestimmbare Steifigkeit einstellen.

Die Verwendung von Glashohlkugeln führt zu einer reduzierten Dichte im Vergleich zu einem Material ohne diesen Füllstoff und so zu einem reduzierten Gewicht des Handgriffs.

Vorzugsweise umfasst das Kunststoffmaterial des Grundkörpers und/oder mindestens eines der mehreren Segmente den einen Füllstoff oder die mehreren Füllstoffe insgesamt in einem Anteil von ca. 65 Gew.-% oder weniger, insbesondere ca. 55 Gew.-% oder weniger. Der Anteilswert ist auf das Gesamtgewicht der Zusammensetzung bezogen und umfasst alle eingesetzten Füllstoffe. Bei den zuvor genannten Anteilen ist insbesondere noch eine gute Verarbeitbarkeit des Kunststoffmaterials gegeben und gleichzeitig sind insbesondere die Eigenschaften des Kunststoffmaterials in weiten Grenzen und unter verschiedenen Gesichtspunkten optimierbar.

Es kann vorgesehen sein, dass das Kunststoffmaterial eine weiche Polymer- oder Elastomer-Komponente und eine harte Polymer-Komponente umfasst.

Die weiche Polymer- oder Elastomer-Komponente weist insbesondere einen E-Modul von ca. 100 MPa bis ca. 1.500 MPa auf. Beispielsweise umfasst die weiche Komponente Kautschuk und/oder ein thermoplastisches Elastomer oder ist daraus gebildet.

Die harte Polymer-Komponente weist insbesondere einen E-Modul von ca. 1.500 MPa bis ca. 15.000 MPa auf. Beispielsweise umfasst die harte Komponente ein Polylactid oder ist daraus gebildet.

Es kann vorgesehen sein, dass eine Oberfläche des Grundkörpers und/oder eine Oberfläche mindestens eines der Segmente der Hüllstruktur vollständig oder zumindest teilweise mit einer Beschichtung versehen ist. Die Beschichtung umfasst insbesondere Polyurethanmaterialien und/oder Silikon-Verbindungen. So kann eine verbesserte Griffigkeit des Handgriffs oder von Teilen davon erreicht werden.

Zur verbesserten Kraftaufnahme von auf den Handgriff wirkenden Kräften ist es günstig, wenn die Kunststoffmaterialien des Grundkörper und/oder des mindestens eines der Segmente der Hüllstruktur einen nach ISO 527 bestimmten E-Modul in einem Bereich von ca. 300 MPa und ca. 15.000 MPa, vorzugsweise in einem Bereich von ca. 1.000 MPa und ca. 3.500 MPa, aufweisen. Dies resultiert in einer verbesserten Handhabbarkeit des Handgriffs. Der E-Modul wird in einem Zugversuch nach ISO 527 bestimmt.

Vorteilhaft ist es, wenn der Grundkörper und/oder die Hüllstruktur, vorzugsweise mindestens eines der Segmente der Hüllstruktur, ein oder mehrere Einlageelemente umfassen, welche von einem Material des Grundkörpers und/ oder einem Material der Hüllstruktur umschlossen oder in dieses eingebettet ist/sind, wobei das eine oder die mehreren Einlageelemente insbesondere einen Faserverbund, insbesondere einen Kohlenstofffaserverbund, beispielsweise ein Roving oder eine Fasermatte, umfassen. So kann eine optimierte Formstabilität des Grundkörpers und/oder der Hüllstruktur erreicht werden.

Vorzugsweise weist zumindest eines der Griffelemente eines oder mehrere konstruktive Strukturelemente auf, durch welche die mechanischen Eigenschaften des entsprechenden Griffelements angepasst werden können. Konstruktive Strukturelemente sind insbesondere Rippenelemente, Wabenelemente, Aussparungen und/oder Hohlräume.

Es kann vorgesehen sein, dass der Handgriff ein Endelement umfasst, welches eine Bewegung des Grundkörpers und/oder der Hüllstruktur in Längsrichtung und/oder in Umfangsrichtung begrenzt. Das Endelement ist beispielsweise von einem mit dem Handgriff zu bedienenden Bauteil abgewandt angeordnet.

Das Endelement begrenzt vorzugsweise eine Verschieblichkeit des Grundkörpers und/oder der Hüllstruktur in Längsrichtung. Insbesondere kann das Endelement eine Drehbarkeit des Grundkörpers und/oder der Hüllstruktur in Umfangsrichtung begrenzen.

Vorzugsweise ist das Endelement als eine Endscheibe oder als ein Endknopf ausgebildet.

Der Grundkörper ist vorzugsweise im Wesentlichen hohlzylindrisch oder teilhohlzylindrisch ausgebildet und umfasst einen Hohlraum zur Aufnahme eines Halteelements, wobei das Halteelement insbesondere eine Hülse ist. So kann eine stabile Festlegung des Grundkörpers und gegebenenfalls von dessen Segmenten und/oder der Segmente der Hüllstruktur realisiert werden.

Es kann vorgesehen sein, dass die Hülse mit einem elastischen Kunststoffmaterial überzogen ist, und aufgeschobene Griffelemente des Handgriffs aufgrund von Wechselwirkungen, beispielsweise Reibungskräften und/oder adhäsiven Wechselwirkungen, mit dem elastischen Kunststoffmaterial drehfest an der Hülse festgelegt sind.

Ergänzend oder alternativ kann es vorteilhaft sein, wenn die Griffelemente in Längsrichtung jeweils eine Durchtrittsöffnung aufweisen, deren Innendurchmesser im Vergleich zu einem Außendurchmesser eines Halteelements ein Untermaß aufweist. Die Griffelemente sind insbesondere durch mechanischen Druck auf das Halteelement aufschiebbar und nach dem Aufschieben, beispielsweise durch Reibungskräfte, fixiert.

Günstig ist es, wenn an einer einen Hohlraum vollständig oder teilweise umgebenden Innenseite des Grundkörpers mindestens ein Fixierelement des Handgriffs zur Fixierung einer Position des Grundkörpers entlang der Umfangsrichtung des Grundkörpers angeordnet ist.

Die den Hohlraum vollständig oder teilweise umgebende Innenseite weist vorzugsweise eine im Wesentlichen zylindrische oder teilzylindrische Form auf.

Alternativ weist die Innenseite einen im Wesentlichen polygonen Querschnitt senkrecht zur Längsrichtung auf, wobei das Polygon insbesondere fünf Ecken oder mehr aufweist.

Das Fixierelement ist vorzugsweise ein Rücksprung, beispielsweise eine Nut.

Alternativ kann vorgesehen sein, dass das Fixierelement als Vorsprung ausgebildet ist, beispielsweise als Leiste, welche in einen komplementär ausgebildeten Rücksprung des Halteelements eingreift.

Für eine platzsparende Unterbringung von weiteren Funktionen kann es vorteilhaft sein, wenn der Handgriff ein oder mehrere funktionale Elemente umfasst, welche insbesondere in den Grundkörper und/oder die Hüllstruktur integriert sind.

Ergänzend oder alternativ kann vorgesehen sein, dass ein oder mehrere funktionale Elemente außerhalb des Grundkörpers und/oder außerhalb der Hüllstruktur verlaufend angebracht sind.

Das eine oder die mehreren funktionalen Elemente sind vorzugsweise durch Druck senkrecht zur Längsrichtung betätigbar.

Die funktionalen Elemente können mechanische Elemente, vorzugsweise Elemente einer Bremsvorrichtung und/oder Elemente eines Richtungsanzeigers, insbesondere eine Blinkvorrichtung, und/oder Elemente einer Belüftungsvorrichtung, insbesondere in Form von Aussparungen, und/oder Sensorelemente umfassen.

Beispielsweise können Elemente einer Bremsvorrichtung eines Fahrrads in und/oder an dem Grundkörper und/oder der Hüllstruktur des Handgriffs festgelegt sein.

Mittels eines oder mehrerer Sensorelemente können beispielsweise bei einer Verwendung des Handgriffs biometrische Werte des Benutzers, wie beispielsweise Temperatur und/oder Puls, ermittelt werden.

Die Erfindung betrifft ferner ein Verfahren zur Herstellung eines erfindungsgemäßen Handgriffs.

Diesbezüglich liegt der Erfindung die Aufgabe zugrunde, ein Verfahren bereitzustellen, mittels welchem sich ein individualisierbarer Handgriff einfach und kostengünstig herstellen lässt.

Die zuvor genannte Aufgabe wird erfindungsgemäß mit einem Verfahren gemäß Anspruch 16 gelöst.

Mit dem erfindungsgemäßen Verfahren ist ein erfindungsgemäßer Handgriff herstellbar.

Eines, mehrere oder sämtliche im Zusammenhang mit dem erfindungsgemäßen Handgriff erläuterten Merkmale und/oder Vorteile gelten für das erfindungsgemäße Verfahren vorzugsweise gleichermaßen.

Vorzugsweise werden mit dem Verfahren mehrere Griffelemente hergestellt, wobei die mehreren Griffelemente jeweils ein Segment des Grundkörpers und ein Segment der Hüllstruktur umfassen, wobei das Segment des Grundkörpers und das Segment der Hüllstruktur im Wesentlichen in einer Ebene senkrecht zur Längsrichtung des Grundkörpers liegen, und wobei die mehreren Griffelemente in Längsrichtung nachfolgend hintereinander angeordnet zusammengefügt werden.

Ferner betrifft die vorliegende Erfindung die Verwendung eines Kunststoffmaterials zur Herstellung eines erfindungsgemäßen Handgriffs in einem additiven Verfahren, insbesondere einem 3D-Druckverfahren, wobei das Kunststoffmaterial eines oder mehrere der folgenden Polymere umfasst: thermoplastische Kunststoffe, vorzugsweise Polyester, insbesondere Polylactide, Polycaprolactone und/oder Polyethylenterephthalat (PET), Styrolpolymere, Polyamide, Polyoxymethylene (POM) und/oder Polyketone, thermoplastische Elastomere, reaktive Harze, vorzugsweise Polyurethane, Epoxy-Verbindungen und/oder Silikone, und weitere thermoplastisch verarbeitbare Polymere.

Diese und weitere Vorteile der vorliegenden Erfindung werden im Folgenden anhand der Zeichnung noch näher erläutert. Es zeigen im Einzelnen:
- Figur 1:: eine schematische perspektivische Darstellung einer Ausführungsform eines erfindungsgemäßen Handgriffs, bei welcher 40 Griffelemente vorgesehen sind;
- Figur 2:: eine perspektivische Ansicht des Handgriffs aus Figur 1 senkrecht zu einer Längsrichtung;
- Figur 3:: eine perspektivische Draufsicht auf ein Griffelement des Handgriffs aus Figur 1 und 2, bei welchem zwei Zungen vorgesehen sind;
- Figur 4:: eine perspektivische Draufsicht auf ein Griffelement, welches senkrecht zur Längsrichtung einen wellenförmigen Querschnitt aufweist;
- Figur 5:: eine schematische Ansicht auf 10 Griffelemente gemäß Figur 4 in zusammengebautem Zustand eines erfindungsgemäßen Handgriffs;
- Figur 6:: eine perspektivische Draufsicht einer Variante eines Griffelements, bei welcher eine Durchtrittsöffnung vorgesehen ist;
- Figur 7:: eine perspektivische Draufsicht auf eine weitere Variante eines Griffelements, bei welchem vier Zungen vorgesehen sind;
- Figur 8:: eine perspektivische Draufsicht auf eine weitere Variante eines Griffelements, bei welcher vier Zungen vorgesehen sind, die teilweise in Umfangsrichtung unterschiedliche Ausdehnungen aufweisen;
- Figur 9:: eine perspektivische Draufsicht auf eine weitere Variante eines Griffelements, bei welchem drei Zungen vorgesehen sind, wobei das Griffelement vier Ausnehmungen aufweist; und
- Figur 10:: eine perspektivische Draufsicht auf eine weitere Variante eines Griffelements, bei welcher sich zwei Zungen in Umfangsrichtung in einem Überlappungsbereich überlappen.

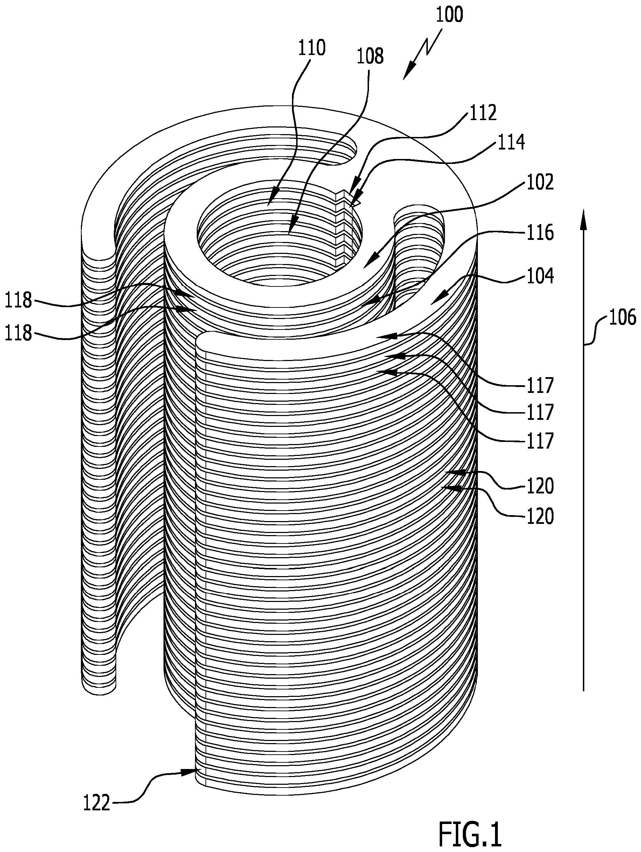

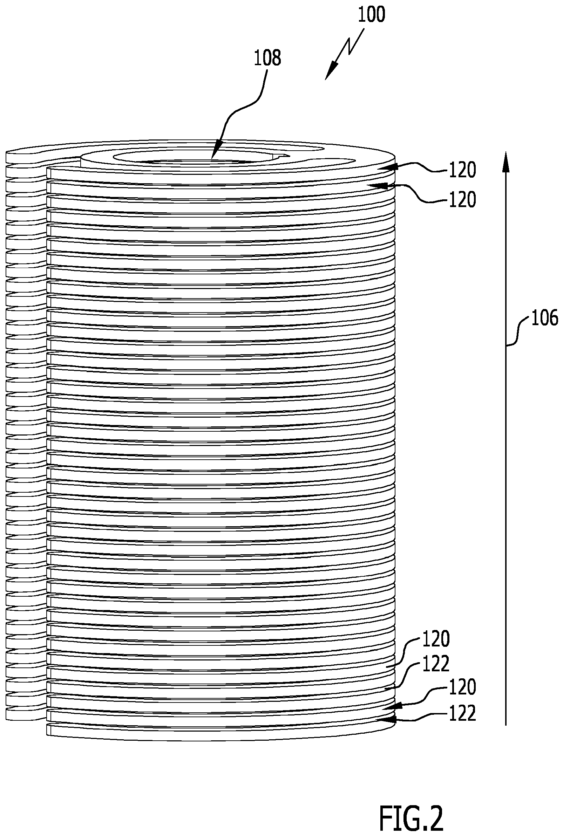

Eine in den Figuren 1 und 2 dargestellte Ausführungsform eines als Ganzes mit 100 bezeichneten erfindungsgemäßen Handgriffs kann in unterschiedlichen Gebieten verwendet werden.

Beispielsweise ist der erfindungsgemäße Handgriff 100 als Werkzeuggriff, insbesondere von Bohrmaschinen, Äxten, Schraubendehern, Rasenmähern etc., als Griff für Sportgeräte, insbesondere für Tennisschläger, Lenkdrachen, Walkingstöcke, Windsurfer, etc., als Griff für Fahrzeuge, insbesondere für Fahrradlenker, Motorradlenker, Lenkräder, Steuerungshebel, etc., als Griff für Waffen, insbesondere Messer, Pistolen und Gewehre, sowie für Freizeitgeräte und Freizeitanlagen, insbesondere Konsolensteuerungen, Billardqueues, Tischkicker und/oder Halterung für mobile Geräte, wie z.B. Smartphones und Tablets geeignet.

Der Handgriff 100 umfasst einen Grundkörper 102 und eine Hüllstruktur 104, welche zumindest abschnittsweise beabstandet zu einem äußeren Umfang 116 des Grundkörpers 102 angeordnet ist.

Der Grundkörper 102 ist vorliegend zylindrisch und als Hohlkörper ausgebildet und erstreckt sich entlang einer Längsrichtung 106.

Ein von dem im Wesentlichen hohlzylindrischen Grundkörper 102 umschlossener Hohlraum 108 dient vorzugsweise der Aufnahme eines hier nicht dargestellten Halteelements in Form eines Halters. Der Halter ist vorzugsweise mit dem jeweiligen Bauteil, an welchem der Handgriff 100 festgelegt ist, verbunden.

Beispielsweise ist der Halter Teil eines Tennisschlägers oder aber mit einem Fahrradlenker verbunden und/oder bildet einen Teil eines Fahrradlenkers.

In dem gezeigten Ausführungsbeispiel weist der Handgriff 100 an einer den Hohlraum 108 radial begrenzenden Innenseite 110 des Grundkörpers 102 ein Fixierelement 112 zur Aufnahme einer Halteleiste auf. Das Fixierelement 112 ist in Form eines Rücksprungs, vorliegend in Form einer Nut 114, ausgebildet.

Die Nut 114 erstreckt sich insbesondere im Wesentlichen parallel zur Längsrichtung 106 des Grundkörpers 102.

Das Fixierelement 112, im vorliegenden Ausführungsbeispiel die Nut 114, dient vorzugsweise einer drehfesten Festlegung des Handgriffs 100 an einer Hülse und/oder Halteleiste.

Die Hüllstruktur 104 erstreckt sich vorzugsweise entlang der Längsrichtung 106 und ist entlang dem äußeren Umfang 116 des Grundkörpers 102 von demselben zumindest teilweise beabstandet.

Die Hüllstruktur 104 umfasst vorliegend vierzig parallel zueinander angeordnete scheibenförmige Segmente 117, welche bezüglich ihrer Mittelebene 119 im Wesentlichen senkrecht zur Längsrichtung 106 des Grundkörpers 102 ausgerichtet angeordnet sind.

Der Grundkörper 102 weist im vorliegenden Ausführungsbeispiel mehrere bezüglich ihrer Mittelebene 119 parallel zueinander angeordnete scheibenförmige Segmente 118 auf, welche im Wesentlichen senkrecht zur Längsrichtung 106 des Grundkörpers 102 ausgerichtet sind.

Der Handgriff 100 umfasst vorliegend vierzig Griffelemente 120, welche jeweils von einem Segment 117 der Hüllstruktur 104 und einem damit verbundenen Segment 118 des Grundkörpers 102 gebildet sind.

Die Segmente 117 der Hüllstruktur 104 und die Segmente 118 des Grundkörpers 102 eines jeweiligen Griffelements 120 liegen vorzugsweise jeweils in einer Ebene senkrecht zur Längsrichtung 106.

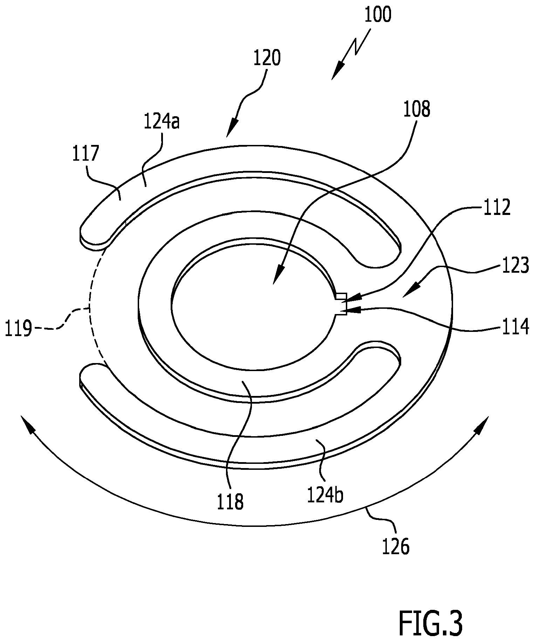

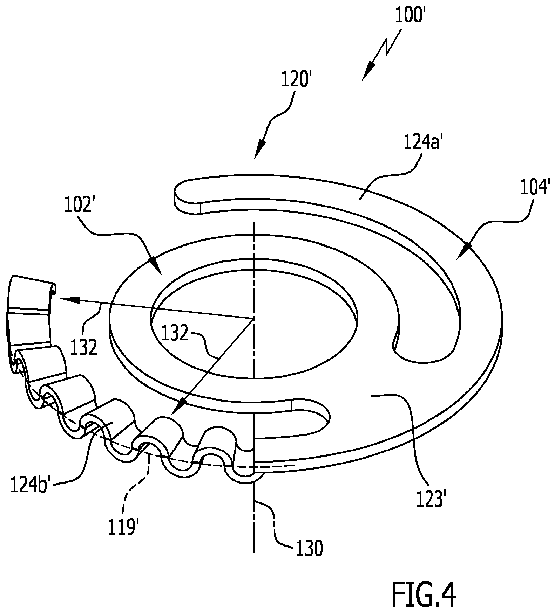

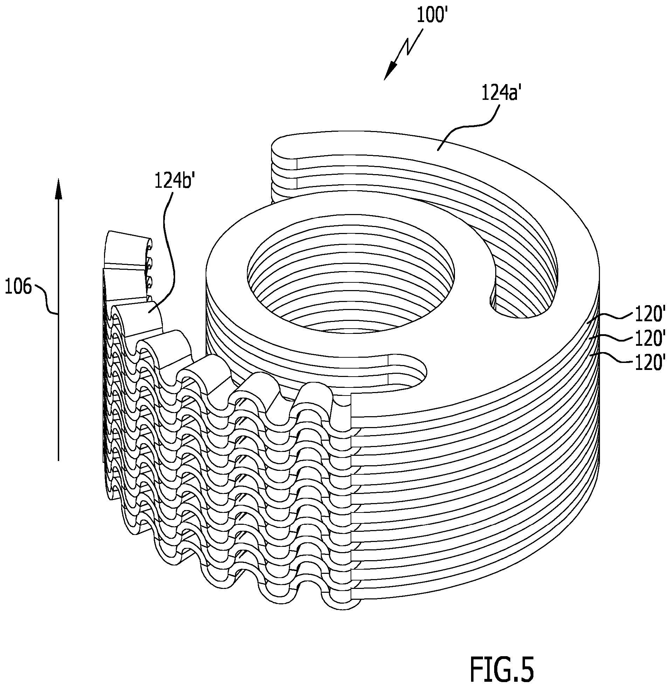

Wie insbesondere in Figur 3 zu sehen ist, sind die Griffelemente 120 zumindest näherungsweise scheibenförmig ausgebildet und weisen gemäß der in den Figuren 1 bis 3 dargestellten Varianten eines Griffelements 120 jeweils eine im Wesentlichen ebene Auflagefläche senkrecht zur Längsrichtung 106 auf. Alternative Ausgestaltungen der Auflageflächen senkrecht zur Längsrichtung werden nachfolgend noch genauer beschrieben werden (vgl. Fig. 4 und 5).

Bei der in den Figuren 1 und 2 gezeigten Ausführungsform eines Handgriffs 100 ist zwischen zwei in Längsrichtung 106 benachbarten Griffelementen 120 jeweils ein, vorliegend scheibenförmiger, Abstandhalter 122 (Abstandhalterelement) angeordnet.

Ergänzend oder alternativ lassen sich die Griffelemente mittels eines oder mehrerer Vorsprünge in Längsrichtung 106 voneinander beabstanden (nicht gezeigt).

In den Figuren 4 und 5 ist eine Abwandlung eines Griffelements 120' eines Handgriffs 100' gezeigt. Gemäß dieser Abwandlung weist eine Zunge 124b' der zwei Zungen 124a', 124b' des Griffelements 120' in ihrem Verlauf entlang der Mittelebene 119' und senkrecht zur Längsrichtung 106 eine Wellenform auf. Die Wellen erstrecken sich dabei strahlenförmig (132) von einer Mittelachse 130 des Grundkörpers 102' weg.

Vorliegend ist die wellenförmige Zunge 124b' aus mehreren im Querschnitt kreisbogenförmigen Elementen zusammengesetzt, welche stoffschlüssig miteinander verbunden sind. Alternativ kann die wellenförmige Zunge 124b' einstückig hergestellt sein.

Gemäß weiterer (nicht dargestellter) Abwandlungen sind beide Zungen 124a', 124b' und/oder der Grundkörper 102' und/oder das Verankerungselement 123'wellenförmig ausgebildet.

Auch zackenförmige Querschnitte von Zungen 124a', 124b' und/oder weiteren Elementen des Griffelements 120' sind im Sinne der Erfindung denkbar.

Alternativ zu einem strahlenförmigen Verlauf der Wellen bzw. Zacken von der Mittelachse des Grundkörpers weg können die Wellen oder gegebenenfalls Zacken auch parallel zueinander ausgerichtet sein.

Wie in Figur 5 zu sehen ist, sind bei der Verwendung von identischen Griffelementen 120' im zusammengebauten Zustand des Handgriffs 100' in Längsrichtung 106 jeweils Wellenberge aneinandergereiht. In dem in Figur 5 dargestellten Ausführungsbeispiel umfasst der Handgriff 100' zehn Griffelemente 120'.

Alternativ sind zwei in Längsrichtung 106 benachbarte Griffelemente 120 in zusammengebautem Zustand des Handgriffs 100 in direktem körperlichem Kontakt miteinander angeordnet.

Günstig ist es, wenn das Segment 118 des Grundkörpers 102 wie im vorliegenden Ausführungsbeispiel im Wesentlichen ringförmig ausgebildet ist und über ein Verankerungselement 123 mit dem Segment 117 der Hüllstruktur 104 verbunden ist.

Vorliegend ist das Segment 118 des Grundkörpers 102 einteilig mit dem Segment 117 der Hüllstruktur 104 und dem Verankerungselement 123 ausgebildet.

Alternativ kann vorgesehen sein, dass das Segment 118 des Grundkörpers 102 im Bereich des Verankerungselements 123 stoffschlüssig und/oder kraftschlüssig und/oder formschlüssig, beispielsweise durch Ineinanderstecken und/oder Ineinanderclipsen, mit dem Segment 117 der Hüllstruktur 104 verbunden ist.

Die jeweiligen Segmente der Hüllstruktur 104 umfassen vorzugsweise zwei Zungen 124a, 124b, welche sich in Umfangsrichtung 126 von dem Verankerungselement 123 jeweils in entgegengesetzten Umfangsrichtungen weg erstrecken. Die Zungen 124a, 124b sind vorzugsweise zumindest näherungsweise teilkreisförmig ausgebildet und von den Segmenten 118 des Grundkörpers 102 beabstandet angeordnet.

Die Zungen 124a, 124b erstrecken sich vorzugsweise jeweils über ca. 90° oder mehr, beispielsweise 130° oder mehr, längs der Umfangsrichtung 126.

Vorzugsweise erstrecken sich die Zungen 124a, 124b jeweils über ca. 160° oder weniger, beispielsweise 150° oder weniger, eines längs der Umfangsrichtung 126 verlaufenden Kreisbogens.

Die Griffelemente 120 des Handgriffs 100 umfassen vorzugsweise eines oder mehrere der folgenden Kunststoffmaterialien: thermoplastische Kunststoffe, vorzugsweise Polyester, insbesondere Polylactide, Polycaprolactone und/oder Polyethylenterephthalat (PET), Styrolpolymere, Polyamide, Polyoxymethylene (POM) und/oder Polyketone, thermoplastische Elastomere, reaktive Harze, vorzugsweise Polyurethane, Epoxy-Verbindungen und/oder Silikone, und weitere thermoplastisch verarbeitbare Polymere.

Alternativ umfassen die Griffelemente 120 andere reaktive nicht-thermoplastische Polymere, welche vergleichbare mechanische Eigenschaften aufweisen.

Es kann vorgesehen sein, dass das Kunststoffmaterial der Griffelemente 120 einen oder mehrere der folgenden Füllstoffe umfasst: Verstärkungsfasern, insbesondere Kohlenstofffasern, Glasfasern, Wollastonit und/oder Naturfasern, Farbstoffe, Pigmente, Mineralstoffe, Glaskugeln, Glashohlkugeln, auf natürlichen Rohstoffen basierte Füllstoffe, insbesondere Kork und/oder Holzmehl, Stabilisatoren, insbesondere UV- und/oder Hitze-Stabilisatoren, und Schlagzähmodifier.

Im Falle von Füllstoffen, umfasst das Kunststoffmaterial des Griffelements 120 den Füllstoff insbesondere in einem Anteil von 65 Gew.-% oder weniger, beispielsweise 55 Gew.-% oder weniger.

Vorliegend sind die Griffelemente 120 aus Polylactid gefertigt und umfassen Farbstoffe in einem Anteil von ca. 2 Gew.-%. Auch mit Farbstoffanteilen in einem Bereich von ca. 0,1 Gew.-% bis ca. 10 Gew.-% können hinreichend gute Färbungen der Griffelemente 120 erzielt werden.

Vorteilhaft kann es sein, wenn die Griffelemente 120 mit einer Oberflächenbeschichtung versehen sind, beispielsweise aus Polyurethan- oder Silikonverbindungen. Dies dient insbesondere der Optimierung der Haptik des Handgriffs 100.

Im zusammengebauten Zustand des Handgriffs 100 sind vorliegend Kräfte, welche senkrecht oder schräg bezüglich der Längsrichtung 106 des Grundkörpers 102 wirken, von den Segmenten 117 der Hüllstruktur 104 aufnehmbar und/ oder werden von den Segmenten 117 der Hüllstruktur 104 aufgenommen.

Insbesondere sind senkrecht oder schräg zur Längsrichtung 106 wirkende Kräfte von den Zungen 124a, 124b federnd aufnehmbar.

Günstig ist es, wenn beispielsweise durch Druck der Finger des Benutzers einwirkende Kräfte, von den jeweiligen Zungen 124a, 124b der einzelnen Griffelemente 120 unabhängig voneinander aufgenommen werden und/oder aufnehmbar sind. Die Zungen 124a, 124b wirken vorliegend lastverteilend. Vorzugsweise werden bei einer Kraftbeaufschlagung die Zungen 124a, 124b zum Grundkörper 102 hin bewegt. Lässt die Kraft nach, kehren die Zungen 124a, 124b in die Normalstellung zurück.

Die Zungen 124a, 124b liegen vorzugsweise auf einem Kreisbogen, welcher konzentrisch ist mit der Mittelachse des Grundkörpers 102.

Das Kunststoffmaterial der Griffelemente 120 weist vorzugsweise einen E-Modul von ca. 300 MPa oder mehr, insbesondere ca. 1.000 MPa oder mehr auf.

Insbesondere weist das Kunststoffmaterial der Griffelemente 120 einen E-Modul von ca. 15.000 MPa oder weniger, insbesondere von ca. 3.500 MPa oder weniger, auf.

Der E-Modul wird in einem Zugversuch nach ISO 527 ermittelt.

Durch Kunststoffmaterialien mit einem E-Modul in den zuvor genannten Bereichen ist vorliegend die gewünschte Federwirkung erzielbar.

Günstig kann es sein, wenn ein Griffelement 120 unter Verwendung mehrerer Polymere gefertigt ist.

Es kann zur Verstärkung der Form der Griffelemente 120 vorgesehen sein, dass ein oder mehrere Griffelemente 120 durch Einlageelemente aus anderen Werkstoffen, beispielsweise Metallen und/oder einem Faserverbund, insbesondere einem Kohlenstofffaserverbund, verstärkt werden. Die Einlageelemente sind dabei vorzugsweise von dem Kunststoffmaterial des Griffelements umschlossen oder in dieses eingebettet.

Die einzelnen Griffelemente 120 sind vorzugsweise durch Aufbringen eines Doppelklebebands, beispielsweise eines Haft- oder Schmelzklebers, stoffschlüssig miteinander verbunden.

Ergänzend oder alternativ sind die Griffelemente 120 formschlüssig und/oder kraftschlüssig miteinander verbunden.

Vorzugsweise ist der Handgriff 100 und/oder dessen Griffelemente 120 in einem additiven Fertigungsverfahren, vorliegend einem 3D-Druckverfahren, hergestellt.

Alternativ kann vorgesehen sein, dass der Handgriff 100 und/oder dessen Griffelemente 120 vollständig oder teilweise durch Spritzgießen, Zerspanen und/oder Ausstanzen hergestellt ist oder nachträglich durch die genannten Verfahren bearbeitbar ist.

Beispielsweise liegt ein Außenradius eines Griffelements 120 im Bereich von ca. 1 cm und ca. 7 cm, insbesondere ca. 2 cm und ca. 4 cm.

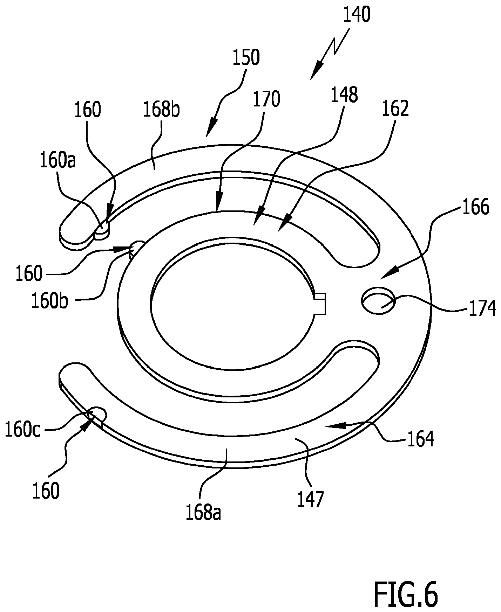

Eine in Figur 6 gezeigte Variante eines Griffelements 150 unterscheidet sich im Wesentlichen dadurch von der in den Figuren 1 bis 3 gezeigten Variante eines Griffelements 120, dass das Griffelement 150 und ein daraus gebildeter Handgriff 140 mehrere funktionale Elemente 160 umfassen.

Das Griffelement 150 umfasst vorliegend ein Segment 148 eines Grundkörpers 162 und ein Segment 147 einer Hüllstruktur 164 des Handgriffs 140.

Das im Wesentlichen ringförmig ausgebildete Segment 148 des Grundkörpers 162 ist im vorliegenden Fall über ein Verankerungselement 166 mit dem Segment 147 der Hüllstruktur 164 verbunden, wobei das Griffelement 150 vorzugsweise einstückig ausgebildet ist.

Das Griffelement 150 weist gemäß der in Figur 6 dargestellten Variante zwei Zungen 168a, 168b auf, welche sich symmetrisch von dem Verankerungselement 166 weg erstrecken und/oder insbesondere von dem Grundkörper 162 gleichmäßig beabstandet angeordnet sind.

Radial zwischen den zwei Zungen 168a, 168b und dem Grundkörper 162, insbesondere an einem äußeren Umfang 170 des Grundkörpers 162, ist vorliegend ein Volumen geschaffen, in welches eine oder beide der Zungen 168a, 168b bei einer Krafteinwirkung senkrecht zur Längsrichtung 106 ausweichen können.

Es kann vorgesehen sein, dass zwei funktionale Elemente 160 auf einer Geraden angeordnet sind, welche sich radial von der Längsrichtung 106 weg erstreckt.

Die funktionalen Elemente 160 sind vorzugsweise einander zugewandt in dem zwischen einer Zunge 168b und dem Grundkörper 162 ausgebildeten Volumen angeordnet, wobei ein funktionales Element 160a, an der Zunge 168b angeordnet ist und wobei ein weiteres funktionales Element 160b an dem äußeren Umfang 170 des Grundkörpers 162 angeordnet ist.

Es kann vorgesehen sein, dass ein weiteres, drittes funktionales Element 160c an der Zunge 168a von dem Grundkörper 162 abgewandt angeordnet ist.

Die funktionalen Elemente 160a, 160b, 160c sind beispielsweise Sensorelemente, welche mittels elektrischer Leitungen steuerbar und/oder auswertbar sind (nicht dargestellt).

Die elektrischen Leitungen sind vorzugsweise teilweise oder vollständig in das Kunststoffmaterial des Griffelements 150 eingebettet und/oder von diesem umschlossen.

Vorliegend weist das Verankerungselement 166 eine Durchtrittsöffnung 174 in Längsrichtung 106 auf, durch welche im zusammengebauten Zustand des Handgriffs 140 weitere elektrische Leitungen, beispielsweise in Form von Kabeln, geführt sein können.

Im Übrigen stimmt die in Figur 6 gezeigte Variante eines Griffelements 150 mit der in den Figuren 1 bis 3 gezeigten Variante eines Griffelements 120 überein, sodass auf deren Beschreibung insoweit Bezug genommen wird.

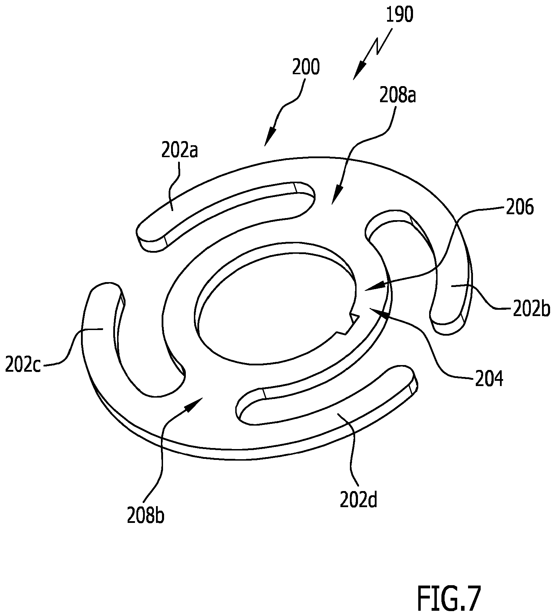

Die in Figur 7 gezeigte Variante eines Griffelements 200 eines Handgriffs 190 unterscheidet sich im Wesentlichen dadurch von der in den Figuren 1 bis 3 gezeigten Variante eines Griffelements 120, dass das Griffelement 200 vier Zungen 202a, 202b, 202c, 202d umfasst, welche jeweils von einem Segment 204 eines Grundkörpers 206 des Handgriffs 190 beabstandet angeordnet sind.

Jeweils zwei Zungen 202a, 202b beziehungsweise 202c, 202d sind in einem Querschnitt senkrecht zur Längsrichtung 106 gemeinsam im Wesentlichen in Form eines Kreisbogens ausgebildet.

Das Griffelement 200 weist vorzugsweise zwei Verankerungselemente 208a, 208b auf, welche sich an das Segment 204 des Grundkörpers 206 anschließen und den Grundkörper 206 mit jeweils zwei Zungen 202a, 202b bzw. 202c, 202d verbinden.

Die vier Zungen 202a, 202b, 202c, 202d sind gemäß der Variante in Figur 7 im Wesentlichen identisch ausgebildet und erstrecken sich vorliegend über jeweils ca. 40° bis ca. 80° eines Kreisbogens, welcher längs der Umfangsrichtung 126 verläuft.

Jeweils zwei Zungen 202a, 202b beziehungsweise 202c, 202d erstrecken sich beidseitig, d.h. in entgegengesetzten Richtungen von einem Verankerungselement 208a bzw. 208b, in Umfangsrichtung 126 weg.

Im Übrigen stimmt die in Figur 7 gezeigte Variante eines Griffelements 200 mit der in den Figuren 1 bis 3 gezeigten Variante des Griffelements 120 überein, sodass auf deren Beschreibungen insoweit Bezug genommen wird.

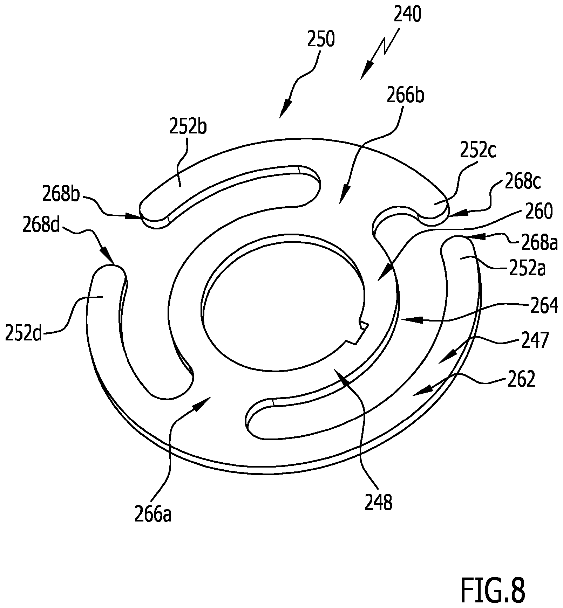

Eine in Figur 8 gezeigte Variante eines Griffelements 250 eines Handgriffs 240 unterscheidet sich im Wesentlichen dadurch von der in Figur 7 gezeigten Variante eines Griffelements 200, dass das Griffelement 250 vier Zungen 252a, 252b, 252c, 252d aufweist, welche teilweise voneinander verschiedene Erstreckungen in Umfangsrichtung 126 aufweisen.

Das Griffelement 250 umfasst vorliegend ein Segment 248 eines in der Draufsicht im Wesentlichen ringförmigen Grundkörpers 260 des Handgriffs 240 und ein Segment 247 einer Hüllstruktur 262 des Handgriffs 240.

Das Segment 247 der Hüllstruktur 262 ist vorzugsweise zumindest teilweise von einem äußeren Umfang 264 des Grundkörpers 260 beabstandet angeordnet und umfasst vorliegend vier Zungen 252a, 252b, 252c, 252d.

Vorzugsweise sind jeweils zwei Zungen 252a, 252b beziehungsweise 252c, 252d über jeweils ein Verankerungselement 266a bzw. 266b an dem Segment 248 des Grundkörpers 260 von dem Grundkörper 260 beabstandet festgelegt.

Die zwei Verankerungselemente 266a, 266b sind vorzugsweise in einem Querschnitt senkrecht zur Längsrichtung 106 des Handgriffs 240 am Außenumfang des Grundkörpers 260 im Wesentlichen einander gegenüberliegend angeordnet.

Vorliegend weisen zwei Zungen 252b, 252d, die an unterschiedlichen Verankerungselementen 266a, 266b festgelegt sind und deren freie Enden 268b, 268d vorliegend einander zugewandt ausgebildet sind, im Wesentlichen identische Ausdehnung in Umfangsrichtung 126 auf.

Zwei weitere Zungen 252a, 252c, deren freie Enden 268a, 268c vorliegend einander zugewandt ausgebildet sind, weisen voneinander verschiedene Ausdehnungen in Umfangsrichtung 126 auf.

Vorzugsweise entspricht eine Ausdehnung einer ersten weiteren Zunge 252a in Umfangsrichtung 126 mindestens dem Zweifachen, insbesondere dem Dreifachen, beispielsweise dem Vierfachen einer Ausdehnung einer zweiten weiteren Zunge 252c in Umfangsrichtung 126.

Vorzugsweise erhöht sich eine elastische Verformbarkeit einer Zunge, je größer ihre Ausdehnung in Umfangsrichtung 126 beabstandet von dem äußeren Umfang des Grundkörpers des Handgriffs ist.

Im Übrigen stimmt die in Figur 8 gezeigte Variante eines Griffelements 250 mit der in Figur 7 gezeigten Variante eines Griffelements 200 überein, sodass auf deren Beschreibung insoweit Bezug genommen wird.

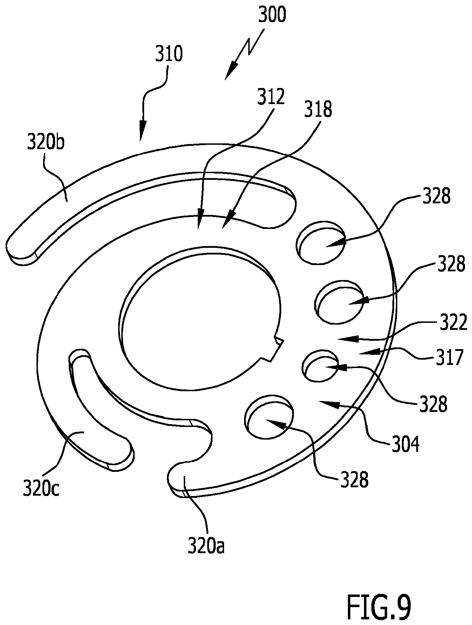

Eine in Figur 9 gezeigte Variante eines Griffelements 310 eines Handgriffs 300 umfasst vorzugsweise ein Segment 318 eines Grundkörpers 312 des Handgriffs 300 und ein Segment 317 einer Hüllstruktur 304 des Handgriffs 300.

Vorliegend umfasst die Hüllstruktur 304 drei Zungen 320a, 320b, 320c.

Vorzugsweise erstrecken sich zwei Zungen 320a, 320b von einem Verankerungselement 322 weg und liegen insbesondere in einem Querschnitt senkrecht zur Längsrichtung 106 auf einem gemeinsamen Kreisbogen. Der Kreisbogen ist vorliegend konzentrisch mit einem Kreisbogen, welcher von einer Innenseite des als Hohlkörper ausgebildeten Grundkörpers 312 gebildet ist, angeordnet.

Die Zungen 320a, 320b weisen vorzugsweise mit ihren freien Enden 324a, 324b aufeinander zu und sind im Wesentlichen in Form eines Hohlzylindersegments ausgebildet.

Günstig kann es sein, wenn eine Zunge 320b die fünffache Ausdehnung oder Erstreckung in Umfangsrichtung 126 einer weiteren Zunge 320a oder mehr, insbesondere die siebenfache Erstreckung oder mehr, aufweist.

Das Verankerungselement 322 ist vorzugsweise in Form eines Verbindungsabschnitts ausgebildet und weist in Längsrichtung 106 vier Durchtrittsöffnungen 328 in Form von Aussparungen, vorliegend mit einem im Wesentlichen kreisförmigen Querschnitt, auf.

Die vier Durchtrittsöffnungen 328 sind gemäß der in Figur 9 gezeigten Variante in einer Reihe angeordnet, welche in einem Querschnitt senkrecht zur Längsrichtung 106 auf einem Kreisbogen verläuft. Der Kreisbogen, auf dem die Reihe von Durchtrittsöffnungen 328 angeordnet sind, ist vorliegend im Querschnitt konzentrisch mit dem Kreisbogen angeordnet, längs dem sich die Zungen 320a, 320b erstrecken.

Vorteilhaft kann es sein, wenn die Hüllstruktur 304 eine weitere Zunge 320c umfasst, welche sich in einem senkrecht zur Längsrichtung 306 genommenen Querschnitt im Wesentlichen spiralförmig von dem Segment 318 des Grundkörpers 312 wegerstreckt und insbesondere im Querschnitt spiralförmig zu der Zunge 320b angeordnet ist.

Im Übrigen stimmt die in Figur 9 gezeigte Variante eines Griffelements 300 mit der in den Figuren 1 bis 3 gezeigten Variante eines Griffelements 120 überein, sodass auf deren Beschreibung insoweit Bezug genommen wird.

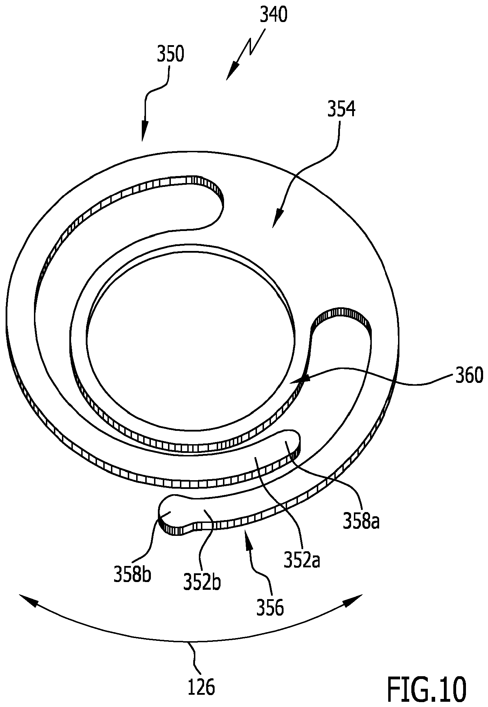

In Figur 10 ist eine weitere Variante eines Griffelements 350 eines Handgriffs 340 gezeigt, bei welcher zwei Zungen 352a, 352b vorgesehen sind, welche sich von einem Verankerungselement 354 weg und aufeinander zu erstrecken und welche sich in einem Überlappungsbereich 356 in Umfangsrichtung 126 überlappen.

Es kann vorgesehen sein, dass ein oder mehrere freie Enden 358a, 358b der Zungen 352a, 352b Verdickungen aufweisen und/oder von Verdickungen gebildet sind. Dies gilt für die zuvor gezeigten Varianten gleichermaßen. Günstig kann es sein, wenn die zwei Zungen 352a, 352b im Wesentlichen jeweils in Form eines Hohlzylindersegments ausgebildet sind.

Vorzugsweise sind die zwei Zungen 352a, 352b in einer Normalstellung ohne Kraftbeaufschlagung in radialer Richtung bezüglich einer Mittelachse eines Grundkörpers 360 des Handgriffs 340 voneinander und von dem in einer Draufsicht im Wesentlichen kreisförmigen Grundkörper 360 beabstandet.

Im Falle einer Kraftbeaufschlagung mit einer Kraft, welche senkrecht oder schräg zur Längsrichtung 106 des Grundkörpers 360 wirkt, werden die beiden Zungen 352a, 352b vorzugsweise in direkten stofflichen Kontakt gebracht und verschieben sich relativ zueinander, insbesondere derart, dass der Überlappungsbereich 356 in Umfangsrichtung 126 vergrößert wird.

Im Übrigen stimmt die in Figur 10 gezeigte Variante eines Griffelements 350 mit der in den Figuren 1 bis 3 gezeigten Variante eines Griffelements 120 überein, sodass auf deren Beschreibung insoweit Bezug genommen wird.

Die zuvor beschriebenen Handgriffe 100, 140, 190, 240, 300, 340 werden vorzugsweise mit dem im Folgenden beschriebenen Verfahren hergestellt.

Vorzugsweise wird der Handgriff 100, 140, 190, 240, 300, 340 mit einem additiven Verfahren, beispielsweise einem 3D-Druckverfahren, hergestellt.

Die erfindungsgemäßen Handgriffe 100, 140, 190, 240, 300, 340 umfassen einen im Wesentlichen teilzylindrischen oder zylindrischen Grundkörper 102, 162, 206, 260, 312, 360 mit einer Längsrichtung 106 und einer Hüllstruktur 104, 164, 262, welche sich im Wesentlichen entlang der Längsrichtung 106 des Grundkörpers 102, 162, 206, 260, 312, 360 und entlang einem äußeren Umfang 116, 170 des Grundkörpers 102, 162, 206, 260, 312, 360 zumindest teilweise von dem Grundkörper 102, 162, 206, 260, 312, 360 beabstandet zu dessen Außenkontur erstreckt, wobei die Hüllstruktur 104, 164, 262 mehrere parallel zueinander angeordnete Segmente 117, 147, 247 umfasst, welche im Wesentlichen senkrecht zur Längsrichtung 106 des Grundkörpers 102, 162, 206, 260, 312, 360 ausgerichtet angeordnet sind.

Vorzugsweise werden Griffelemente 120, 150, 190, 250, 310, 350 hergestellt, welche jeweils ein Segment 118, 148, 204, 248, 318 des Grundkörpers 102, 162, 206, 260, 312, 360 und ein Segment 117, 147, 247 der Hüllstruktur 104, 164, 262 umfassen, die im Wesentlichen in einer Ebene senkrecht zur Längsrichtung 106 liegen, und danach zum entsprechenden Handgriff zusammen gefügt.

Während des 3D-Druckverfahrens wird vorliegend jedes Griffelement 120, 150, 190, 250, 310, 350 einzeln gedruckt, wobei günstigerweise mittels physikalischen und/oder chemischen Schmelzprozessen und Härtungsprozessen ein Kunststoffmaterial in Form des Griffelements 120, 150, 190, 250, 310, 350 aufgebaut wird.

Insbesondere eignen sich selektives Lasersintern und/oder Stereolithographie und/oder Digital Light Processing und/oder Multi Jet Modeling und/oder Multi Jet Fusion und/oder Fused Deposition Molding als 3D-Druckverfahren.

Der Handgriff 100, 140, 190, 240, 300, 340 ist vorzugsweise durch federelastische Verformung der Zungen unabhängig voneinander bei Druck senkrecht zur Längsrichtung 106 an die Handform des Benutzers und an die jeweilige Veränderung der Handform bei Benutzung des Handgriffs 100, 140, 190, 240, 300, 340 reversibel anpassbar.

## Patentansprüche

1. Handgriff (100), umfassend einen im Wesentlichen teilzylindrischen oder zylindrischen Grundkörper (102), welcher sich entlang einer Längsrichtung (106) erstreckt, und eine Hüllstruktur (104), welche sich im Wesentlichen entlang der Längsrichtung (106) des Grundkörpers (102) und entlang einem äußeren Umfang (116) des Grundkörpers (102) und zumindest teilweise von dem Grundkörper (102) beabstandet erstreckt, wobei die Hüllstruktur (104) mehrere bezüglich ihrer Mittelebene (119) parallel zueinander angeordnete Segmente (117) umfasst, welche im Wesentlichen senkrecht zur Längsrichtung (106) des Grundkörpers (102) ausgerichtet sind und wobei die Hüllstruktur (104) zumindest partiell elastisch verformbar ist,
**dadurch gekennzeichnet,**
**dass** zumindest eines der mehreren Segmente (117) der Hüllstruktur (104) eine oder mehrere Zungen (124a, 124b) umfasst, wobei die eine oder die mehreren Zungen (124a, 124b) mittels eines oder mehrerer Verankerungselemente (123) an dem Grundkörper (102) des Handgriffs (100) festgelegt sind.

2. Handgriff (100) nach Anspruch 1, **dadurch gekennzeichnet, dass** die Hüllstruktur (104) und/oder der Grundkörper (102) des Handgriffs (100) aus einem Kunststoffmaterial hergestellt sind und/oder dass die mehreren Segmente (117) im Wesentlichen scheibenförmig sind und/oder dass eine Außenfläche mindestens eines, insbesondere sämtlicher, der Segmente (117) der Hüllstruktur (104) in einem Querschnitt senkrecht zur Längsrichtung (106) im Wesentlichen kreisförmig oder im Wesentlichen teilkreisförmig ist.

3. Handgriff (100) nach Anspruch 1 oder 2, **dadurch gekennzeichnet, dass** zumindest eines der mehreren, insbesondere sämtliche, Segmente (117) der Hüllstruktur (104) eine oder mehrere Zungen (124a, 124b), vorzugsweise zwei bis vier Zungen (124a, 124b), aufweist, welche vollständig oder teilweise von dem äußeren Umfang (116) des Grundkörpers (102) beabstandet angeordnet sind und welche insbesondere im Wesentlichen in Form eines Hohlzylindersegments ausgebildet sind und dass optional zumindest eine der Zungen (124a', 124b') in ihrem Verlauf senkrecht zur Längsrichtung (106) wellenförmig oder zackenförmig ausgebildet ist.

4. Handgriff (100) nach einem der Ansprüche 1 bis 3, **dadurch gekennzeichnet, dass** zumindest eines der mehreren, insbesondere sämtliche, Segmente (117) der Hüllstruktur (104) zwei bis vier Zungen (124a, 124b) umfasst, wobei die zwei bis vier Zungen (124a, 124b) mittels eines oder mehrerer Verankerungselemente (123) an dem Grundkörper (102) des Handgriffs (100) festgelegt sind und wobei sich insbesondere zwei Zungen (124a, 124b) beidseitig von jeweils einem des einen oder der mehreren Verankerungselemente (123) in entgegengesetzten Umfangsrichtungen (126) des Handgriffs (100) von dem Verankerungselement (123) weg erstrecken und dass optional mindestens eines der einen oder der mehreren Verankerungselemente (166) in Längsrichtung (106) des Grundkörpers (162) mindestens eine Durchtrittsöffnung (174) aufweist.

5. Handgriff (100) nach einem der Ansprüche 1 bis 4, **dadurch gekennzeichnet, dass** die eine oder die mehreren Zungen (124a, 124b) federelastisch an dem Grundkörper (102) des Handgriffs (100) festgelegt sind, wobei die eine oder die mehreren Zungen (124a, 124b), insbesondere unabhängig voneinander, elastisch verformbar zur Aufnahme von Kräften, welche quer, insbesondere senkrecht, zur Längsrichtung (106) des Grundkörpers (102) wirken, ausgebildet sind und/oder dass die eine oder die mehreren Zungen (124a, 124b) sich über ca. 40° bis ca. 160°, insbesondere ca. 90° bis ca. 150°, eines Kreisbogens erstrecken, welcher längs einer Umfangsrichtung (126) des Grundkörpers (102) verläuft.

6. Handgriff (100) nach einem der Ansprüche 1 bis 5, **dadurch gekennzeichnet, dass** die mehreren Segmente (117) der Hüllstruktur (104) jeweils zwei oder mehrere Zungen (352a, 352b) umfassen, welche sich im Wesentlichen entlang einer Umfangsrichtung (126) des Handgriffs (100) erstrecken, wobei sich zumindest zwei der zwei oder der mehreren Zungen (352a, 352b) in einem Bereich (356) entlang der Umfangsrichtung (126) überlappen und/oder einander übergreifen.

7. Handgriff (100) nach einem der Ansprüche 1 bis 6, **dadurch gekennzeichnet, dass** der Handgriff (100) mehrere Griffelemente (120) umfasst, welche in Längsrichtung (106) des Grundkörpers (102) hintereinander angeordnet sind, wobei die mehreren Griffelemente (120) jeweils ein Segment (118) des Grundkörpers (102) und ein Segment (117) der Hüllstruktur (104) umfassen, wobei das Segment (118) des Grundkörpers (102) und das Segment (117) der Hüllstruktur (104) im Wesentlichen in einer Ebene senkrecht zur Längsrichtung (106) des Grundkörpers (102) liegen und dass optional der Handgriff (100) ein oder mehrere Abstandhalterelemente (122) umfasst, welche in Längsrichtung (106) des Grundkörpers (102) zwischen jeweils zwei Griffelementen (120) angeordnet sind.

8. Handgriff (100) nach einem der Ansprüche 1 bis 7, **dadurch gekennzeichnet, dass** der Grundkörper (102) oder Segmente (118) davon und/oder die Hüllstruktur (104) oder Segmente (117) davon unter Verwendung eines additiven Verfahrens, insbesondere unter Verwendung eines 3D-Druckverfahrens, hergestellt sind und/oder dass der Grundkörper (102) in einem Querschnitt senkrecht zur Längsrichtung (106) eine Polygon-Form hat, wobei das Polygon insbesondere fünf Ecken oder mehr aufweist.

9. Handgriff (100) nach einem der Ansprüche 1 bis 8, **dadurch gekennzeichnet, dass** der Grundkörper (102) zumindest teilweise und/oder mindestens eines der mehreren Segmente (117) der Hüllstruktur (104) jeweils aus einem Kunststoffmaterial hergestellt sind, wobei das Kunststoffmaterial eines oder mehrere der folgenden Polymere umfasst:
thermoplastische Kunststoffe, vorzugsweise Polyester, insbesondere Polylactide, Polycaprolactone und/ oder Polyethylenterephthalat (PET), Styrolpolymere, Polyamide, Polyoxymethylene (POM) und/oder Polyketone, thermoplastische Elastomere, reaktive Harze, vorzugsweise Polyurethane, Epoxy-Verbindungen und/oder Silikone, und weitere thermoplastisch verarbeitbare Polymere und/oder dass die Kunststoffmaterialien des Grundkörpers (102) und/oder von mindestens einem der Segmente (117) der Hüllstruktur (104) einen nach ISO 527 bestimmten E-Modul in einem Bereich von ca. 300 MPa und
ca. 15.000 MPa, vorzugsweise in einem Bereich von ca. 1.000 MPa und
ca. 3.500 MPa, aufweisen.

10. Handgriff (100) nach einem der Ansprüche 1 bis 9, **dadurch gekennzeichnet, dass** der Grundkörper (102) zumindest teilweise und/oder mindestens eines der mehreren Segmente (117) der Hüllstruktur (104) jeweils aus einem Kunststoffmaterial hergestellt sind, wobei das Kunststoffmaterial einen oder mehrere der folgenden Füllstoffe umfasst:
Verstärkungsfasern, insbesondere Kohlenstofffasern, Glasfasern,
Wollastonit und/oder Naturfasern, Farbstoffe, Pigmente, Mineralstoffe, Glaskugeln, Glashohlkugeln, auf natürlichen Rohstoffen basierte Füllstoffe, insbesondere Kork und/oder Holzmehl, Stabilisatoren, insbesondere UV- und/oder Hitze-Stabilisatoren, und Schlagzähmodifier und dass optional das Kunststoffmaterial des Grundkörpers (102) und/oder
mindestens eines der mehreren Segmente (117) den einen oder die mehreren Füllstoffe in einem Anteil von ca. 65 Gew.-% oder weniger, bevorzugt ca. 55 Gew.-% oder weniger, umfasst.

11. Handgriff (100) nach einem der Ansprüche 1 bis 10, **dadurch gekennzeichnet, dass** eine Oberfläche des Grundkörpers (102) und/oder eine Oberfläche mindestens eines der Segmente (117) der Hüllstruktur (104) vollständig oder zumindest teilweise mit einer Beschichtung versehen ist, welche insbesondere Polyurethanmaterialien und/oder Silikon-Verbindungen umfasst.

12. Handgriff (100) nach einem der Ansprüche 1 bis 11, **dadurch gekennzeichnet, dass** der Grundkörper (102) und/oder die Hüllstruktur (104) ein oder mehrere Einlageelemente umfassen, welche von einem Material des Grundkörpers (102) und/oder einem Material der Hüllstruktur (104) umschlossen oder in diese eingebettet sind, wobei das eine oder die mehreren Einlageelemente vorzugsweise einen Faserverbund, insbesondere einen Kohlenstofffaserverbund, umfassen.

13. Handgriff (100) nach einem der Ansprüche 1 bis 12, **dadurch gekennzeichnet, dass** einzelne Elemente des Handgriffs (100) stoffschlüssig, insbesondere durch Verkleben, und/oder kraftschlüssig und/oder formschlüssig miteinander verbunden sind und/oder dass der Handgriff (100) ein Endelement umfasst, welches eine Bewegung des Grundkörpers (102) und/oder der Hüllstruktur (104) in Längsrichtung (106) und/oder in Umfangsrichtung (126) des Grundkörpers (102) begrenzt.

14. Handgriff (100) nach einem der Ansprüche 1 bis 13, **dadurch gekennzeichnet, dass** der Grundkörper (102) im Wesentlichen hohlzylindrisch oder teilhohlzylindrisch ausgebildet ist und einen Hohlraum (108) zur Aufnahme eines Halteelements umfasst, wobei das Halteelement vorzugsweise eine Hülse ist und wobei optional an einer den Hohlraum (108) vollständig oder teilweise umgebenden Innenseite (110) des Grundkörpers (102) mindestens ein Fixierelement (112) des Handgriffs (100) zur Fixierung einer Position des Grundkörpers (102) entlang der Umfangsrichtung (126) des Grundkörpers (102) angeordnet ist.

15. Handgriff (140) nach einem der Ansprüche 1 bis 14, **dadurch gekennzeichnet, dass** der Handgriff (140) ein oder mehrere funktionale Elemente (160) umfasst, welche insbesondere in den Grundkörper (162) und/oder die Hüllstruktur (164) integriert sind, wobei das eine oder die mehreren funktionalen Elemente (160) vorzugsweise durch Druck senkrecht zur Längsrichtung (106) betätigbar sind und dass optional das eine oder die mehreren funktionalen Elemente (160) mechanische Elemente, vorzugsweise Elemente einer Bremsvorrichtung und/oder eines Richtungsanzeigers, insbesondere eine Blinkvorrichtung, und/oder Elemente einer Belüftungsvorrichtung, insbesondere in Form von Aussparungen, und/ oder Sensorelemente umfassen.

16. Verfahren zur Herstellung eines Handgriffs (100) nach einem der Ansprüche 1 bis 15 wobei das Verfahren folgende Schritte umfasst:
- Herstellen eines im Wesentlichen teilzylindrischen oder zylindrischen Grundkörpers (102), welcher sich entlang einer Längsrichtung (106) des Grundkörpers (102) erstreckt, und einer Hüllstruktur (104), welche sich im Wesentlichen entlang der Längsrichtung (106) des Grundkörpers (102) und entlang einem äußeren Umfang (116) des Grundkörpers (102) zumindest teilweise beabstandet von dem Grundkörper (102) erstreckt, wobei die Hüllstruktur (104) mehrere bezüglich ihrer Mittelebene (119) parallel zueinander angeordnete Segmente (117) umfasst, welche im Wesentlichen senkrecht zur Längsrichtung (106) des Grundkörpers (102) ausgerichtet sind, wobei die Hüllstruktur (104) zumindest partiell elastisch hergestellt wird, wobei zumindest eines der mehreren Segmente (117) der Hüllstruktur (104) eine oder mehrere Zungen (124a, 124b) umfasst, wobei die eine oder die mehreren Zungen (124a, 124b) mittels eines oder mehrerer Verankerungselemente (123) an dem Grundkörper (102) festgelegt sind.

17. Verfahren nach Anspruch 16, **dadurch gekennzeichnet, dass** mehrere Griffelemente (120) hergestellt werden, wobei die mehreren Griffelemente (120) jeweils ein Segment (118) des Grundkörpers (102) und ein Segment (117) der Hüllstruktur (104) umfassen, wobei das Segment (118) des Grundkörpers (102) und das Segment (117) der Hüllstruktur (104) im Wesentlichen in einer Ebene senkrecht zur Längsrichtung (106) des Grundkörpers (102) liegen, und wobei die mehreren Griffelemente (120) in Längsrichtung (106) hintereinander angeordnet zusammengefügt werden.

18. Verwendung eines Kunststoffmaterials zur Herstellung eines Handgriffs (100) nach einem der Ansprüche 1 bis 15 in einem additiven Verfahren, insbesondere einem 3D-Druckverfahren, wobei das Kunststoffmaterial eines oder mehrere der folgenden Polymere umfasst: thermoplastische Kunststoffe, vorzugsweise Polyester, insbesondere Polylactide, Polycaprolactone und/oder Polyethylenterephthalat (PET), Styrolpolymere, Polyamide, Polyoxymethylene (POM) und/oder Polyketone, thermoplastische Elastomere, reaktive Harze, vorzugsweise Polyurethane, Epoxy-Verbindungen und/oder Silikone, und weitere thermoplastisch verarbeitbare Polymere.

## Claims

1. A handle (100) comprising a main body (102), which is substantially in the form of a partial cylinder or is substantially cylindrical and extends in a longitudinal direction (106), and a sleeve structure (104), which extends substantially in the longitudinal direction (106) of the main body (102) and along an outer periphery (116) of the main body (102) and at least partially at a spacing from the main body (102), wherein the sleeve structure (106) comprises a plurality of segments (117), which are arranged parallel to one another in relation to their central plane (119) and which are oriented substantially perpendicularly to the longitudinal direction (106) of the main body (102), and wherein the sleeve structure (104) is elastically deformable at least in part,
**characterised in that**
at least one of the plurality of segments (117) of the sleeve structure (104) comprises one or more tongues (124a, 124b), wherein the one or more tongues (124a, 124b) are secured to the main body (102) of the handle (100) by means of one or more anchoring elements (123).

2. A handle (100) according to claim 1, **characterised in that** the sleeve structure (104) and/or the main body (102) of the handle (100) are produced from a plastics material, and/or **in that** the plurality of segments (117) are substantially planar, and/or **in that** an outer face of at least one, in particular all, of the segments (117) of the sleeve structure (104) is substantially circular or substantially in the form of a partial circle in a cross section perpendicular to the longitudinal direction (106).

3. A handle (100) according to claim 1 or 2, **characterised in that** at least one of the plurality, in particular all, of the segments (117) of the sleeve structure (104) has one or more tongues (124a, 124b), preferably two to four tongues (124a, 124b), which are arranged fully or partially at a spacing from the outer periphery (116) of the main body (102) and which in particular are substantially in the form of a hollow-cylinder segment, and **in that** optionally at least one of the tongues (124a', 124b') is wavy or zigzagged over its course perpendicular to the longitudinal direction (106).

4. A handle (100) according to one of claims 1 to 3, **characterised in that** at least one of the plurality, in particular all, of the segments (117) of the sleeve structure (104) comprises two to four tongues (124a, 124b), wherein the two to four tongues (124a, 124b) are secured to the main body (102) of the handle (100) by means of one or more anchoring elements (123), and wherein in particular two tongues (124a, 124b) extend from either side of a respective one of the one or more anchoring elements (123), away from the anchoring element (123) in opposite peripheral directions (126) of the handle (100), and **in that** optionally at least one of the one or more anchoring elements (166) has at least one through-opening (174) in the longitudinal direction (106) of the main body (162).

5. A handle (100) according to one of claims 1 to 4, **characterised in that** the one or more tongues (124a, 124b) are secured resiliently to the main body (102) of the handle (100), wherein the one or more tongues (124a, 124b) are elastically deformable, in particular independently of one another, in order to absorb forces acting transversely, in particular perpendicularly, to the longitudinal direction (106) of the main body (102), and/or **in that** the one or more tongues (124a, 124b) extend over approximately 40° to approximately 160°, in particular approximately 90° to 150°, of a circular arc running in a peripheral direction (126) of the main body (102).

6. A handle (100) according to one of claims 1 to 5, **characterised in that** the plurality of segments (117) of the sleeve structure (104) each comprise two or more tongues (352a, 352b) which extend substantially in a peripheral direction (126) of the handle (100), wherein at least two of the two or more tongues (352a, 352b) overlap and/or extend past one another in a region (356) along the peripheral direction (126).

7. A handle (100) according to one of claims 1 to 6, **characterised in that** the handle (100) comprises a plurality of grip elements (120) which are arranged successively in the longitudinal direction (106) of the main body (102), wherein the plurality of grip elements (120) each comprise a segment (118) of the main body (102) and a segment (117) of the sleeve structure (104), wherein the segment (118) of the main body (102) and the segment (117) of the sleeve structure (104) lie substantially in a plane perpendicular to the longitudinal direction (106) of the main body (102), and **in that** optionally the handle (100) comprises one or more spacer elements (122) which are arranged in the longitudinal direction (106) of the main body (102) between each two grip elements (120).

8. A handle (100) according to one of claims 1 to 7, **characterised in that** the main body (102) or segments (118) thereof and/or the sleeve structure (104) or segments (117) thereof are produced with use of an additive method, in particular with use of a 3D printing method, and/or **in that** the main body (102) has a polygonal shape in a cross section perpendicular to the longitudinal direction (106), wherein the polygon has in particular five corners or more.

9. A handle (100) according to one of claims 1 to 8, **characterised in that** the main body (102) at least in part and/or at least one of the plurality of segments (117) of the sleeve structure (104) are produced in each case from a plastics material, wherein the plastics material comprises one or more of the following polymers: thermoplastics, preferably polyesters, in particular polylactides, polycaprolactones and/or polyethylene terephthalate (PET), styrene polymers, polyamides, polyoxymethylenes (POM) and/or polyketones, thermoplastic elastomers, reactive resins, preferably polyurethanes, epoxy compounds and/or silicones, and further thermoplastically processible polymers, and/or **in that** the plastics materials of the main body (102) and/or of at least one of the segments (117) of the sleeve structure (104) have a modulus of elasticity in a range of between approximately 300 MPa and approximately 15,000 MPa, preferably in a range of between approximately 1,000 MPa and approximately 3,500 MPa, determined in accordance with ISO 527.

10. A handle (100) according to one of claims 1 to 9, **characterised in that** the main body (102) at least in part and/or at least one of the plurality of segments (117) of the sleeve structure (104) are produced in each case from a plastics material, wherein the plastics material comprises one or more of the following fillers: reinforcement fibres, in particular carbon fibres, glass fibres, wollastonite and/or natural fibres, dyes, pigments, minerals, glass beads, hollow glass beads, fillers based on raw materials, in particular cork and/or sawdust, stabilisers, in particular UV and/or heat stabilisers, and impact resistance modifiers, and **in that** optionally the plastics material of the main body (102) and/or at least one of the plurality of segments (117) comprises the one or more fillers in a proportion of approximately 65 wt.% or less, preferably approximately 55 wt.% or less.

11. A handle (100) according to one of claims 1 to 10, **characterised in that** a surface of the main body (102) and/or a surface of at least one of the segments (117) of the sleeve structure (104) is provided fully or at least partially with a coating which in particular comprises polyurethane materials and/or silicone compounds.

12. A handle (100) according to one of claims 1 to 11, **characterised in that** the main body (102) and/or the sleeve structure (104) comprise one or more insert elements which are enclosed by a material of the main body (102) and/or a material of the sleeve structure (104) or are embedded therein, wherein the one or more insert elements preferably comprise a fibre composite, in particular a carbon fibre composite.

13. A handle (100) according to one of claims 1 to 12, **characterised in that** individual elements of the handle (100) are connected to one another by a substance-to-substance bond, in particular by gluing, and/or in a force-locking and/or positive-locking manner, and/or **in that** the handle (100) comprises an end element which limits a movement of the main body (102) and/or of the sleeve structure (104) in the longitudinal direction (106) and/or in the peripheral direction (126) of the main body (102).

14. A handle (100) according to one of claims 1 to 13, **characterised in that** the main body (102) is substantially hollow-cylindrical or is substantially in the form of a partial hollow cylinder and comprises a cavity (108) for receiving a retaining element, wherein the retaining element is preferably a sleeve, and wherein optionally at least one fixing element (112) of the handle (100) is arranged on an inner side (110) of the main body (102), which inner side surrounds the cavity (108) fully or partially, to fix a position of the main body (102) in the peripheral direction (126) of the main body (102).

15. A handle (140) according to one of claims 1 to 14, **characterised in that** the handle (140) comprises one or more functional elements (160), which in particular are integrated in the main body (162) and/or the sleeve structure (164), wherein the one or more functional elements (160) preferably are actuatable by pressure perpendicularly to the longitudinal direction (106), and **in that** optionally the one or more functional elements (160) comprise mechanical elements, preferably elements of a braking device and/or a direction indicator, in particular a flashing device, and/or elements of a ventilation device, in particular in the form of cut-outs, and/or sensor elements.

16. A method for producing a handle (100) according to one of claims 1 to 15, wherein the method comprises the following steps:
- producing a main body (102), which is substantially in the form of a partial cylinder or is substantially cylindrical and extends in a longitudinal direction (106) of the main body (102), and a sleeve structure (104), which extends substantially in the longitudinal direction (106) of the main body (102) and over an outer periphery (116) of the main body (102) at least partially at a spacing from the main body (102), wherein the sleeve structure (104) comprises a plurality of segments (117) which are arranged parallel to one another in relation to their central plane (119) and which are oriented substantially perpendicularly to the longitudinal direction (106) of the main body (102), wherein the sleeve structure (104) is produced to be elastic at least in part, wherein at least one of the plurality of segments (117) of the sleeve structure (104) comprises one or more tongues (124a, 124b), wherein the one or more tongues (124a, 124b) are secured to the main body (102) by means of one or more anchoring elements (123).

17. A method according to claim 16, **characterised in that** a plurality of grip elements (120) are produced, wherein the plurality of grip elements (120) each comprise a segment (118) of the main body (102) and a segment (117) of the sleeve structure (104), wherein the segment (118) of the main body (102) and the segment (117) of the sleeve structure (104) lie substantially in a plane perpendicular to the longitudinal direction (106) of the main body (102), and wherein the plurality of grip elements (120) are joined together arranged successively in the longitudinal direction (106).

18. Use of a plastics material to produce a handle (100) according to one of claims 1 to 15 in an additive method, in particular a 3D printing method, wherein the plastics material comprises one or more of the following polymers: thermoplastics, preferably polyesters, in particular polylactides, polycaprolactones and/or polyethylene terephthalate (PET), styrene polymers, polyamides, polyoxymethylenes (POM) and/or polyketones, thermoplastic elastomers, reactive resins, preferably polyurethanes, epoxy compounds and/or silicones, and further thermoplastically processible polymers.

## Revendications

1. Poignée (100), comprenant un corps de base (102) sensiblement en partie cylindrique ou cylindrique, lequel s'étend le long d'une direction longitudinale (106), et une structure d'enveloppe (104), laquelle s'étend sensiblement le long de la direction longitudinale (106) du corps de base (102) et le long d'une périphérie extérieure (116) du corps de base (102) et au moins en partie à distance du corps de base (102), dans laquelle la structure d'enveloppe (104) comprend plusieurs segments (117) disposés parallèlement les uns aux autres par rapport à leur plan médian (119), lesquels sont orientés sensiblement perpendiculairement à la direction longitudinale (106) du corps de base (102) et dans laquelle la structure d'enveloppe (104) peut être au moins partiellement déformée élastiquement,
**caractérisée en ce**
**qu'**au moins un des différents segments (117) de la structure d'enveloppe (104) comprend une ou plusieurs languettes (124a, 124b), dans laquelle l'une des ou les différentes languettes (124a, 124b) sont fixées au corps de base (102) de la poignée (100) au moyen d'un ou plusieurs éléments d'ancrage (123).

2. Poignée (100) selon la revendication 1, **caractérisée en ce que** la structure d'enveloppe (104) et/ou le corps de base (102) de la poignée (100) sont fabriqués à partir d'une matière plastique et/ou que les différents segments (117) sont sensiblement en forme de disque et/ou qu'une surface extérieure d'au moins un, en particulier de tous les segments (117) de la structure d'enveloppe (104) est dans une coupe transversale perpendiculairement à la direction longitudinale (106) sensiblement circulaire ou sensiblement en partie circulaire.

3. Poignée (100) selon la revendication 1 ou 2, **caractérisée en ce qu'**au moins un des différents segments (117) de la structure d'enveloppe (104), en particulier tous, présente une ou plusieurs languettes (124a, 124b), de préférence deux à quatre languettes (124a, 124b), lesquelles dont disposées entièrement ou en partie à distance de la périphérie extérieure (116) du corps de base (102) et lesquelles sont réalisées en particulier sensiblement sous forme d'un segment cylindrique creux et qu'éventuellement au moins une des languettes (124a', 124b') est réalisée de manière ondulée ou en dents de scie dans son tracé perpendiculairement à la direction longitudinale (106).

4. Poignée (100) selon l'une quelconque des revendications 1 à 3, **caractérisée en ce qu'**au moins un des différents segments (117) de la structure d'enveloppe (104), en particulier tous, comprend deux à quatre languettes (124a, 124b), dans laquelle les deux à quatre languettes (124a, 124b) sont fixées au corps de base (102) de la poignée (100) au moyen d'un ou plusieurs éléments d'ancrage (123) et dans laquelle en particulier deux languettes (124a, 124b) de part et d'autre de respectivement un de l'un ou des différents éléments d'ancrage (123) s'étendent dans des directions périphériques (126) opposées de la poignée (100) en s'écartant de l'élément d'ancrage (123) et que, éventuellement, au moins un des un ou des différents éléments d'ancrage (166) présente dans la direction longitudinale (106) du corps de base (162) au moins une ouverture de passage (174).

5. Poignée (100) selon l'une quelconque des revendications 1 à 4, **caractérisée en ce que** l'une des ou les différentes languettes (124a, 124b) sont fixées de manière élastique au corps de base (102) de la poignée (100), dans laquelle l'une des ou les différentes languettes (124a, 124b) sont réalisées de manière déformable élastiquement, en particulier indépendamment les unes des autres, pour la réception de forces, lesquelles agissent transversalement, en particulier perpendiculairement, à la direction longitudinale (106) du corps de base (102) et/ou que l'une des ou les différentes languettes (124a, 124b) s'étendent sur environ 40° à environ 160°, en particulier environ 90° à environ 150°, d'un arc de cercle, lequel s'étend le long d'une direction périphérique (126) du corps de base (102).

6. Poignée (100) selon l'une quelconque des revendications 1 à 5, **caractérisée en ce que** les différents segments (117) de la structure d'enveloppe (104) comprennent respectivement deux languettes (352a, 352b) ou plus, lesquelles s'étendent sensiblement le long d'une direction périphérique (126) de la poignée (100), dans laquelle au moins deux des deux languettes (352a, 352b) ou plus se chevauchent et/ou se recouvrent mutuellement dans une zone (356) le long de la direction périphérique (126).

7. Poignée (100) selon l'une quelconque des revendications 1 à 6, **caractérisée en ce que** la poignée (100) comprend plusieurs éléments de préhension (120), lesquels sont disposés les uns derrière les autres dans la direction longitudinale (106) du corps de base (102), dans laquelle les différents éléments de préhension (120) comprennent respectivement un segment (118) du corps de base (102) et un segment (117) de la structure d'enveloppe (104), dans laquelle le segment (118) du corps de base (102) et le segment (117) de la structure d'enveloppe (104) se situent sensiblement dans un plan perpendiculairement à la direction longitudinale (106) du corps de base (102) et que, éventuellement, la poignée (100) comprend un ou plusieurs éléments d'écartement (122), lesquels sont disposés entre respectivement deux éléments de préhension (120) dans la direction longitudinale (106) du corps de base (102).

8. Poignée (100) selon l'une quelconque des revendications 1 à 7, **caractérisée en ce que** le corps de base (102) ou des segments (118) de celui-ci et/ou la structure d'enveloppe (104) ou des segments (117) de celle-ci sont fabriqués à l'aide d'un procédé additif, en particulier à l'aide d'un procédé d'impression 3D, et/ou que le corps de base (102) présente dans une coupe transversale perpendiculairement à la direction longitudinale (106) une forme de polygone, dans laquelle le polygone présente en particulier cinq sommets ou plus.

9. Poignée (100) selon l'une quelconque des revendications 1 à 8, **caractérisée en ce que** le corps de base (102) au moins en partie et/ou au moins un des différents segments (117) de la structure d'enveloppe (104) sont fabriqués respectivement à partir d'une matière plastique, dans laquelle la matière plastique comprend un ou plusieurs des polymères suivants : les thermoplastiques, de préférence les polyesters, en particulier les acides polylactiques, polycaprolactones et/ou le polyéthylène téréphtalate (PET), les polymères styréniques, polyamides, polyoxyméthylènes (POM) et/ou polycétones, élastomères thermoplastiques, résines réactives, de préférence les polyuréthanes, composés époxy et/ou silicones, et d'autres polymères transformables de manière thermoplastique et/ou que les matières plastiques du corps de base (102) et/ou d'au moins un des segments (117) de la structure d'enveloppe (104) présentent un module d'élasticité déterminé selon ISO 527 dans une plage d'environ 300 MPa et d'environ 15 000 MPa, de préférence dans une plage d'environ 1 000 MPa et d'environ 3 500 MPa.

10. Poignée (100) selon l'une quelconque des revendications 1 à 9, **caractérisée en ce que** le corps de base (102) au moins en partie et/ou au moins un des différents segments (117) de la structure d'enveloppe (104) sont fabriqués respectivement à partir d'une matière plastique, dans laquelle la matière plastique comprend une ou plusieurs des charges suivantes : fibres de renforcement, en particulier fibres de carbone, fibres de verre, wollastonite et/ou fibres naturelles, colorants, pigments, substances minérales, billes de verre, billes de verre creuses, charges à base de matières premières naturelles, en particulier liège et/ou farine de bois, stabilisants, en particulier stabilisants UV et/ou thermiques, et agents anti-choc et que, éventuellement, la matière plastique du corps de base (102) et/ou au moins un des différents segments (117) comprend l'une des ou les différentes charges dans une proportion d'environ 65 % en poids ou moins, de préférence d'environ 55 % en poids ou moins.

11. Poignée (100) selon l'une quelconque des revendications 1 à 10, **caractérisée en ce qu'**une surface du corps de base (102) et/ou une surface d'au moins un des segments (117) de la structure d'enveloppe (104) est pourvue entièrement ou au moins en partie d'un revêtement, lequel comprend en particulier des matériaux polyuréthane et/ou composés de silicone.

12. Poignée (100) selon l'une quelconque des revendications 1 à 11, **caractérisée en ce que** le corps de base (102) et/ou la structure d'enveloppe (104) comprennent un ou plusieurs éléments formant garniture intérieure, lesquels sont entourés par un matériau du corps de base (102) et/ou un matériau de la structure d'enveloppe (104) ou sont intégrés dans ceux-ci, dans laquelle l'un des ou les différents éléments formant garniture intérieure comprennent de préférence un composé de fibres, en particulier un composé de fibres de carbone.

13. Poignée (100) selon l'une quelconque des revendications 1 à 12, **caractérisée en ce que** des éléments individuels de la poignée (100) sont reliés les uns aux autres par liaison de matière, en particulier par collage, et/ou à force et/ou par coopération de formes et/ou que la poignée (100) comprend un élément d'extrémité, lequel délimite un mouvement du corps de base (102) et/ou de la structure d'enveloppe (104) dans la direction longitudinale (106) et/ou dans la direction périphérique (126) du corps de base (102).

14. Poignée (100) selon l'une quelconque des revendications 1 à 13, **caractérisée en ce que** le corps de base (102) est réalisé de manière sensiblement cylindrique creuse ou partiellement cylindrique creuse et comprend une cavité (108) pour la réception d'un élément de retenue, dans laquelle l'élément de retenue est de préférence un manchon et dans laquelle, éventuellement, au moins un élément de fixation (112) de la poignée (100) est disposé sur une face intérieure (110) du corps de base (102) entourant entièrement ou en partie la cavité (108), pour la fixation d'une position du corps de base (102) le long de la direction périphérique (126) du corps de base (102).

15. Poignée (140) selon l'une quelconque des revendications 1 à 14, **caractérisée en ce que** la poignée (140) comprend un ou plusieurs éléments fonctionnels (160), lesquels sont intégrés en particulier dans le corps de base (162) et/ou la structure d'enveloppe (164), dans laquelle l'un des ou les différents éléments fonctionnels (160) peuvent être actionnés de préférence par pression perpendiculairement à la direction longitudinale (106) et que, éventuellement, l'un des ou les différents éléments fonctionnels (160) comprennent des éléments mécaniques, de préférence des éléments d'un dispositif de freinage et/ou d'un feu de changement de direction, en particulier d'un dispositif clignotant, et/ou des éléments d'un dispositif de ventilation, en particulier sous forme d'évidements, et/ou d'éléments capteurs.

16. Procédé pour fabriquer une poignée (100) selon l'une quelconque des revendications 1 à 15, dans lequel le procédé comprend les étapes suivantes :
- la fabrication d'un corps de base (102) sensiblement en partie cylindrique ou cylindrique, lequel s'étend le long d'une direction longitudinale (106) du corps de base (102), et d'une structure d'enveloppe (104), laquelle s'étend sensiblement le long de la direction longitudinale (106) du corps de base (102) et le long d'une périphérie extérieure (116) du corps de base (102) au moins en partie à distance du corps de base (102), dans lequel la structure d'enveloppe (104) comprend plusieurs segments (117) disposés parallèlement les uns aux autres par rapport à leur plan médian (119), lesquels sont orientés sensiblement perpendiculairement à la direction longitudinale (106) du corps de base (102), dans laquelle la structure d'enveloppe (104) est fabriquée de manière au moins partiellement déformée élastiquement, dans laquelle au moins un des différents segments (117) de la structure d'enveloppe (104) comprend une ou plusieurs languettes (124a, 124b), dans laquelle l'une des ou les différentes languettes (124a, 124b) sont fixées au corps de base (102) au moyen d'un ou plusieurs éléments d'ancrage (123).

17. Procédé selon la revendication 16, **caractérisé en ce que** plusieurs éléments de poignée (120) sont fabriqués, dans lequel les différents éléments de poignée (120) comprennent respectivement un segment (118) du corps de base (102) et un segment (117) de la structure d'enveloppe (104), dans lequel le segment (118) du corps de base (102) et le segment (117) de la structure d'enveloppe (104) se situent sensiblement dans un plan perpendiculairement à la direction longitudinale (106) du corps de base (102), et dans lequel les différents éléments de préhension (120) sont réunis en étant disposés les uns derrière les autres dans la direction longitudinale (106).

18. Utilisation d'une matière plastique pour la fabrication d'une poignée (100) selon l'une quelconque des revendications 1 à 15 dans un procédé additif, en particulier un procédé d'impression 3D, dans laquelle la matière plastique comprend un ou plusieurs des polymères suivants : les thermoplastiques, de préférence les polyesters, en particulier les acides polylactiques, polycaprolactones et/ou le polyéthylène téréphtalate (PET), les polymères styréniques, polyamides, polyoxyméthylènes (POM) et/ou polycétones, élastomères thermoplastiques, résines réactives, de préférence les polyuréthanes, composés époxy et/ou silicones, et d'autres polymères transformables de manière thermoplastique.
